# EUROPEAN PATENT APPLICATION

(11) **EP 4 700 766 A1**
(43) Date of publication of application: **25.02.2026**
(21) Application number: 25196074.6
(22) Date of filing: 14.08.2025
(51) Int. Cl.: G10L 15/22, G10L 15/26, G10L 15/18, G06F 16/9032

(54) **CONVERSATIONAL ARTIFICIAL INTELLIGENCE SYSTEM FOR MEDIA DEVICES**

(30) Priority: 19.08.2024 US 202418808361
(71) Applicant: Roku, Inc., San Jose, CA 95110 (US)
(72) Inventor: NGUYEN, Bao Quoc, San Jose (US); ZHANG, Ying, Sunnyvale (US); CARRENO, Arnaldo, Austin (US)
(74) Representative: Latham, Stuart Alexander

(57) **Abstract**

System, apparatus, article of manufacture, method and/or computer program embodiments are provided for using an artificial intelligence system to interact with a device. An example method can include obtaining a transcript of a voice input requesting a task from a media device and recognized using automatic speech recognition; based on the transcript and auxiliary data, generating an input to a neural network, the auxiliary data including context data and/or historical data associated with previous voice interactions with the media device; based on the input, determining, by the neural network, a response to the voice input; generating, by the neural network, an output based on the response; converting the output from the neural network into an executable command configured to trigger the media device to perform an action associated with the response to the voice input; and based on the command, triggering the media device to perform the action.

## Description

### BACKGROUND

### FIELD

This disclosure is generally directed to artificial intelligence systems for interacting with devices and, more specifically, a conversational artificial intelligence system configured to assist user interactions with media devices such as televisions.

### SUMMARY

Provided herein are system, apparatus, article of manufacture, method and/or computer program product embodiments (and/or combinations and/or sub-combinations thereof) for implementing a conversational artificial intelligence system for interactions between users and media devices. In some aspects, a method is provided for implementing a conversational artificial intelligence system for interactions between users and media devices. An example method can include obtaining a text transcript of a voice input recognized using automatic speech recognition (ASR), the voice input requesting a media device to perform one or more tasks; based on the text transcript and auxiliary data, generating an input to a neural network configured to assist with voice interactions with the media device. The auxiliary data can include a context of the media device, a context of a user associated with the voice input, and/or historical data associated with previous voice interactions with the media device assisted by the neural network. The method can also include determining, by the neural network based on the input, a response to the voice input; generating, by the neural network, an output based on the response to the voice input; converting the output from the neural network into one or more commands that are executable at the media device and configured to trigger the media device to perform one or more actions associated with the response to the voice input; and based on the one or more commands, triggering the media device to perform the one or more actions.

In some aspects, a system is provided for implementing a conversational artificial intelligence system for interactions between users and media devices. The system can include one or more computing and/or media devices such as, for example, a television, a media player, a server, a computer, a set-top box, an Internet-of-Things (IoT) device, a peripheral device, a mobile device (e.g., a smartphone, etc.), a wearable computing device (e.g., a smartwatch, smartglasses, a head-mounted display (HMD), extended reality (e.g., virtual reality, augmented reality, mixed reality, virtual reality with video passthrough, etc.) glasses, etc.), a single-board computer (SBC) or system-on-chip (SoC) device, a gaming system, and/or a smart device, among others.

The system can include memory used to store data, such as computing instructions, and one or more processors coupled to the memory and configured to perform operations including obtaining a text transcript of a voice input recognized using automatic speech recognition (ASR), the voice input requesting a media device to perform one or more tasks; based on the text transcript and auxiliary data, generating an input to a neural network configured to assist with voice interactions with the media device. The auxiliary data can include a context of the media device, a context of a user associated with the voice input, and/or historical data associated with previous voice interactions with the media device assisted by the neural network. The one or more processors can be configured to perform additional operations including determining, by the neural network based on the input, a response to the voice input; generating, by the neural network, an output based on the response to the voice input; converting the output from the neural network into one or more commands that are executable at the media device and configured to trigger the media device to perform one or more actions associated with the response to the voice input; and based on the one or more commands, triggering the media device to perform the one or more actions.

In some aspects, a non-transitory computer-readable medium is provided for implementing a conversational artificial intelligence system for interactions between users and media devices. In some cases, the non-transitory computer-readable medium can have instructions stored thereon that, when executed by one or more processors, cause the one or more processors to perform operations including obtaining a text transcript of a voice input recognized using automatic speech recognition (ASR), the voice input requesting a media device to perform one or more tasks; based on the text transcript and auxiliary data, generating an input to a neural network configured to assist with voice interactions with the media device. The auxiliary data can include a context of the media device, a context of a user associated with the voice input, and/or historical data associated with previous voice interactions with the media device assisted by the neural network. The operations can further include determining, by the neural network based on the input, a response to the voice input; generating, by the neural network, an output based on the response to the voice input; converting the output from the neural network into one or more commands that are executable at the media device and configured to trigger the media device to perform one or more actions associated with the response to the voice input; and based on the one or more commands, triggering the media device to perform the one or more actions.

### BRIEF DESCRIPTION OF THE FIGURES

The accompanying drawings are incorporated herein and form a part of the specification.
FIG. 1 is a block diagram illustrating an example multimedia environment, according to some examples of the present disclosure.
FIG. 2 is a block diagram illustrating an example streaming media device, according to some examples of the present disclosure.
FIG. 3 is a block diagram illustrating an example architecture of an example automatic speech recognition system, according to some examples of the present disclosure.
FIG. 4 is a block diagram illustrating an example process implemented by a conversational artificial intelligence system for interacting with devices, according to some examples of the present disclosure.
FIG. 5 is a flowchart illustrating an example method for using a conversational artificial intelligence system to interact with a media device, according to some examples of the present disclosure.
FIG. 6 is a flowchart illustrating another example method for using a conversational artificial intelligence system to interact with a media device, according to some examples of the present disclosure.
FIG. 7 is a flowchart illustrating an example method for interacting with a media device using a conversational artificial intelligence system implemented by a system server, according to some examples of the present disclosure.
FIG. 8A is a diagram illustrating an example architecture of an example neural network, according to some examples of the present disclosure.
FIG. 8B is a diagram illustrating another example architecture that can be used to implement a large language model, according to some examples of the present disclosure.
FIG. 9 illustrates an example computer system that can be used for implementing various aspects of the present disclosure.

In the drawings, like reference numbers generally indicate identical or similar elements. Additionally, generally, the left-most digit(s) of a reference number identifies the drawing in which the reference number first appears.

### DETAILED DESCRIPTION

Users can access and consume media content using media devices such as, for example and without limitation, mobile phones (e.g., smartphones), set-top boxes, computers (e.g., desktop computers, laptop computers, tablet computers, etc.), televisions (TVs), IPTV receivers, media players, monitors, projectors, video game consoles, smart wearable devices (e.g., smartwatches, smartglasses, head-mounted displays (HMDs), extended reality devices (e.g., virtual reality glasses, augmented reality glasses, mixed reality glasses, virtual reality devices with video passthrough, etc.), single-board computers (SBCs) or system-on-chip (SoC) devices, and Internet-of-Things (IoT) devices, among other devices. The media content can include or encompass digital formats and/or assets such as, for example and without limitation, videos (e.g., live videos, prerecorded or on-demand videos, streamed videos, TV shows, movies, animated videos, motion graphics videos, live action recordings, video clips, any sequence of video frames or graphics, etc.), video games, audio, text (e.g., closed captions, subtitles, and/or any other text content), graphics, video channels, and/or images, among other types.

For example, a user can use a media device to watch a video from a media content platform, such as a media content platform associated with a streaming service, a media content platform associated with an online content delivery network, a media player application, an online video sharing application, a web browser, a TV platform, etc. The video can include, for example, a live or on-demand video, such as a movie, a TV show, an animated video, a video broadcast, a video game, a video conference, etc. The media device can stream or access the video from storage, and display the video for the user on a screen of the media device and/or a separate/external display. The user may also use the media device to manage settings of the video (e.g., a volume, closed caption and/or subtitle settings, a resolution of the video, etc.), control a playback of the video, and/or access other media content. In many cases, the media device can have, provide, and/or access a large amount of media content items (e.g., live videos, on-demand videos, etc.), channels, applications, settings, capabilities, output devices, functionalities, and/or other media features and components.

Unfortunately, it can be very difficult and cumbersome for users to navigate such a large amount of media content items, channels, applications, settings, capabilities, output devices, functionalities, and/or other media features and components. For example, it can be difficult and cumbersome for users to find, access, manage, control, and/or understand the various features, functionalities, and/or content available through/from the media devices. Moreover, some media devices, such as televisions, may have (or may more commonly use or rely on) more limited input devices for users to interact with the media devices, control the media devices, navigate and/or select features, functionalities, and/or content of the media devices, etc. For example, users commonly use remote controls to interact with televisions, control the televisions, navigate and/or select features, functionalities, and/or content of the televisions, etc. Some users may also find it even more difficult and cumbersome to interact with such media devices and navigate the large amounts of features, functionalities, and/or content available using remote controls.

Provided herein are system, apparatus, device, method (also referred to as a process) and/or computer program product embodiments, combinations and/or sub-combinations thereof (also referred to as "systems and techniques" hereinafter) for using, configuring, and implementing a conversational artificial intelligence (AI) system to assist user interactions with media devices, such as televisions, set-top boxes, media players, etc. Users can interact with the media devices through the conversational AI system using voice/speech inputs, as well as any other inputs that the users desire to use. For example, a user can provide voice/speech inputs to a media device via a microphone(s) on a remote control associated with the media device (or any other microphone device). The remote control can provide the voice/speech input (and/or an associated audio signal) to the media device for processing by the conversational AI system. The conversational AI system can obtain an input associated with the voice/speech input from a dedicated interface used to generate inputs to the conversational AI system containing and/or encoding information from the voice/speech input and any other relevant data. The conversational AI system can process the inputs from the dedicated interface to generate outputs triggered by the voice/speech input, such as messages or dialogue for the user, commands to execute actions requested by the user via the voice/speech input, etc.

The conversational AI system can include and/or be powered by an AI model, such as a large language model, that can help users interact with the media devices, understand inputs from the users such as voice/speech inputs, and significantly reduce the difficulty, complexity, and cumbersomeness of navigating the large amount of content, channels, applications, settings, capabilities, output devices, functionalities, features, components, and/or other items available at or from the media devices. The AI model can have significant natural language understanding capabilities, context understanding capabilities, dialogue capabilities, generative capabilities, decision-making capabilities, and other output capabilities, which lead to significant comprehension by the conversational AI system of user queries and inputs, relevant responses to user queries and inputs, as well as high-quality dialogues with users. The AI model can intelligently perform and automate tasks and actions based on user inputs such as voice/speech inputs, allowing the users to verbally interact with the media devices through the conversational AI system in order to implement media device configurations, actions, operations, etc., and receive audible and/or visual assistance.

The conversational AI system can provide a diverse range of outputs and implement a wide variety of actions, which can improve the user experience with the media device and the conversational AI system. For example, the conversational AI system can output visual content (e.g., text, videos, etc.) for display, audio content (e.g., speech, dialogue, etc.) for output by a speaker device, commands to trigger device actions and operations, etc. Moreover, the conversational AI system can perform multiple tasks simultaneously (e.g., in parallel) for faster processing and responses to user inputs. The conversational AI system can represent, behave, and/or be structured as a single system or component powered by the AI model (with dedicated interface to communicate with other devices and components), rather than a pipeline of multiple systems or components, such as a pipeline with an automatic speech recognition system, a natural language understanding system, a dialogue management system, a generative system, a processing or decision-making system, etc. This way, the conversational AI system can provide reduced complexity, reduced (or eliminated) integration issues, and greater domain adaptation flexibility. For example, the conversation AI system can easily integrate with different systems and devices without (or with reduced or limited) integration issues, and can easily adapt to various media, device, and contextual domains (and any other domains) and/or needs within such domains without requiring significant re-engineering, testing, troubleshooting, etc.

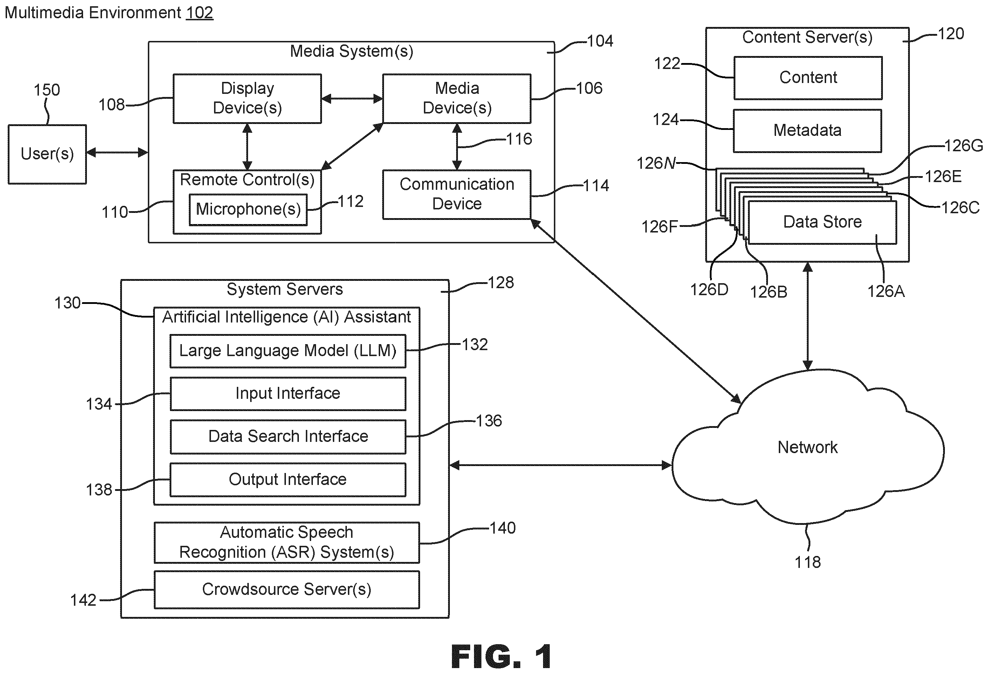

Various embodiments and aspects of this disclosure may be implemented using, and/or may be part of, multimedia environment 102 shown in FIG. 1. It is noted, however, that the multimedia environment 102 is provided for illustrative purposes and is not limiting. Examples and embodiments of this disclosure may be implemented using, and/or may be part of, environments that are different from and/or in addition to the multimedia environment 102, as will be appreciated by persons skilled in the relevant art(s) based on the teachings contained herein. An example of the multimedia environment 102 shall now be described.

### Example Multimedia Environment

FIG. 1 illustrates a block diagram of a multimedia environment 102, according to some embodiments. In a non-limiting example, multimedia environment 102 may be directed to media content, such as streaming media, a conversational AI system implemented by one or more devices, and interactions with media devices and display systems using the conversation AI system. However, this disclosure is applicable to any type of media (instead of or in addition to media content and interactions with media devices and display systems), as well as any mechanism, means, protocol, method and/or process for distributing media content, interacting with media devices, and/or implementing conversational systems for interacting with various devices.

The multimedia environment 102 may include a media system(s) 104. The media system(s) 104 can include one or more media systems, and each media system can include and/or represent a family room, a kitchen, a backyard, a home theater, a school classroom, a library, a car, a boat, a bus, a plane, a movie theater, a stadium, an auditorium, a park, a bar, a conference room, a home, an entertainment room, a restaurant, an office, or any other location or space where it is desired to receive and play media content, such as streaming content. A user(s) 150 may operate the media system(s) 104 to select and consume content. The user(s) 150 can include or represent one or more users in multimedia environment 102.

The media system(s) 104 may include a media device(s) 106. The media device(s) 106 can be coupled to a display device(s) 108. The media device(s) 106 can include one or more media devices, the display device(s) can include one or more media devices, and each media device can be coupled to a display device (or multiple display devices) from the one or more display devices. It is noted that terms such as "coupled," "connected to," "attached," "linked," "combined" and similar terms may refer to physical, electrical, magnetic, logical, etc., connections, unless otherwise specified herein.

The media device(s) 106 may be or include one or more streaming media devices, DVDs or BLU-RAY devices, audio/video playback devices, cable boxes, gaming systems, televisions, head-mounted display (HMD) devices, set-top boxes, video display devices, and/or digital video recording devices, to name just a few non-limiting examples. Display device(s) 108 may include or be part of one or more monitors, televisions (TVs), desktop computers, laptop computers, mobile phones (e.g., smartphones), tablet computers, wearable devices (e.g., a smartwatch, an HMD, smartglasses, etc.), screens, appliances, internet-of-things (IoT) devices, SBCs or SoCs, and/or projectors, to name just a few non-limiting examples. In some examples, the media device(s) 106 can be a part of, integrated with, operatively coupled to, and/or connected to one or more respective display devices, such as the display device(s) 108.

The media device(s) 106 may be configured to communicate with network 118 via a respective communication device 114. The communication device 114 may include, for example, a cable modem or satellite TV transceiver. The media device(s) 106 may communicate with the communication device 114 over a link 116. The link 116 may include wireless (such as WiFi) and/or wired connections.

In various examples, the network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system(s) 104 may include a remote control(s) 110. The remote control(s) 110 can be any component, part, apparatus and/or method for controlling the media device(s) 106 and/or display device(s) 108, such as a remote control, a tablet, laptop computer, mobile phone (e.g., smartphone), wearable, on-screen controls, integrated control buttons, audio controls, or any combination thereof, to name just a few examples. In some examples, the remote control(s) 110 can wirelessly communicate with the media device(s) 106 and/or display device(s) 108 using cellular, Bluetooth, infrared, WIFI, WIFI direct, etc., or any combination thereof. The remote control(s) 110 may include a microphone(s) 112, which is further described below.

The multimedia environment 102 may include a content server(s) 120 (also called a content provider, channel or source). Although only one content server is shown in FIG. 1, in practice, the multimedia environment 102 may include any number of content servers. The content server(s) 120 may be configured to communicate with network 118.

The content server(s) 120 may store content 122 and metadata 124. Content 122 may include any combination of music, videos, movies, TV programs, multimedia, images, still pictures, text, graphics, gaming applications, advertisements, programming content, public service content, government content, local community content, targeted media content, software, and/or any other content or data objects in electronic form.

In some examples, metadata 124 can include data about content 122. For example, metadata 124 may include associated or ancillary information indicating or related to writer, director, producer, composer, artist, actor, summary, chapters, production, history, year, trailers, alternate versions, related content, applications, and/or any other information pertaining or relating to the content 122. Metadata 124 may also or alternatively include links to any such information pertaining or relating to the content 122. Metadata 124 may also or alternatively include one or more indexes of content 122, such as but not limited to a trick mode index.

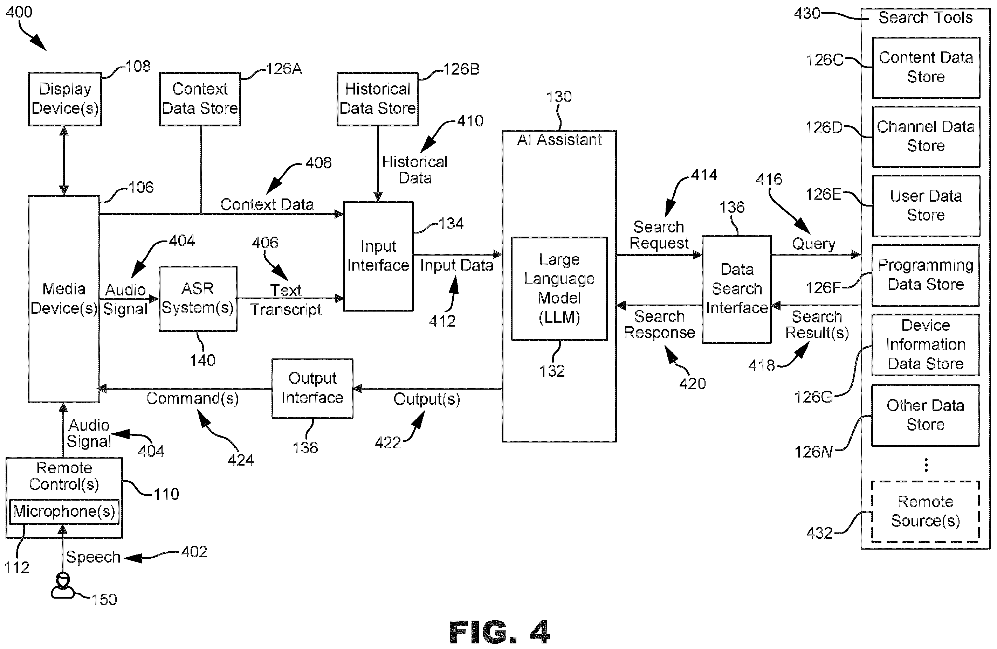

In some aspects, the content server(s) 120 can include data stores 126A-126*N* (collectively referred to as "data stores 126" hereinafter). The data stores 126 can include stores and/or sources of different types of data, such as media content and/or media content information, information about media content channels, information about the user(s) 150, information about one or more devices (e.g., the media device(s) 106, the display device(s) 108, the remote control(s) 110, and/or any other device), information about media programming (e.g., channel programming, media broadcast programming, event programming, etc.), and/or any other information. In some cases, the data stores 126 can include a context data store 126A, a historical data store 126B, a content data store126C, a channel data store 126D, a user data store 126E, a programming data store 126F, and/or other data store 126N, as further described below with respect to FIG. 4. In some examples, the data stores 126 can include information used by the artificial intelligence (AI) assistant 130 (and/or the large language model 132) to generate dialogue with the user(s) 150, formulate responses to queries or questions from the user(s) 150, verify and/or correct information and/or outputs from the large language model 132, etc., as further described herein.

The multimedia environment 102 may include system servers 128. The system servers 128 may operate to support the media device(s) 106 and/or the display device(s) 108 from a remote location and/or network, such as the cloud, a backend, a remote datacenter, etc. It is noted that the structural and functional aspects of the system servers 128 may wholly or partially exist in the same or different ones of the system servers 128.

In some examples, the system servers 128 may include, host, operate, and/or implement an AI assistant 130, an automatic speech recognition (ASR) system(s) 140, and/or a crowdsource server(s) 142. The AI assistant 130 and the ASR system(s) 140 can be part of or implemented by a same system server (or set of system servers) or different system servers. Moreover, the AI assistant 130 and the ASR system(s) 140 can be communicatively coupled to each other. The ASR system(s) 140 can receive audio inputs such as voice/speech inputs including speech from the user(s) 150, and recognize the speech in the audio inputs using automatic speech recognition. In some examples, the ASR system(s) 140 can recognize speech from the user(s) 150 (e.g., provided by the user(s) 150 via a voice input device, such as the microphone(s) 112) included in an audio input, and generate a transcription of the speech.

The ASR system(s) 140 can provide the transcription of the speech from the user(s) 150 to the AI assistant 130. A large language model (LLM) 132 of the AI assistant 130 can use the transcription (and, optionally, other data) to identify any queries from the user(s) 150 contained in the speech, generate dialogue and/or any communications for/with the user(s) 150, respond to questions and/or queries from the user(s) 150, implement actions based on communications from the user(s) 150, trigger the media device(s) 106 and/or the display device(s) 108 to perform actions based on decisions made by the LLM 132 in response to queries and/or communications from the user(s) 150, function as a voice assistant for the user(s) 150 to provide information to the user(s) 150 determined by the LLM 132 and/or trigger device operations (e.g., operations by the media device(s) 106, the display device(s) 108, and/or any other device) determined by the LLM 132 based on the speech from the user(s) 150, etc.

In some examples, in addition to the LLM 132, the AI assistant 130 can also include an input interface 132, a data search interface 136, and an output interface 138. In other examples, the input interface 132, the data search interface 136, and/or the output interface 138 can be separate from the AI assistant 130. For example, in some cases, the input interface 132, the data search interface 136, and/or the output interface 138 can be implemented by one or more separate systems, models, components, algorithms, etc.

The input interface 134 can be used to generate inputs to the LLM 132 based on the transcriptions generated by the ASR system(s) 140, which include text recognized from speech from the user(s) 150, and further based on any other data such as data from one or more of the data stores 126. The LLM 132 can use the data search interface 136 to query any of the data stores 126 for information that can be used by the LLM 132 to generate or formulate an output and/or verify or revise any output from the LLM 132. The LLM 132 can also use the output interface 138 to transform outputs from the LLM 132 into commands that can be executed or implemented by one or more target devices to perform any actions instructed and/or represented in the outputs from the LLM 132 and/or convey information to the user(s) 150 from the outputs by the LLM 132. Non-limiting examples of actions triggered by such commands can include outputting audio via one or more speakers to audibly/verbally convey information to the user(s) 150, displaying visual information (e.g., text, images, graphics, videos, etc.) via one or more display devices (e.g., the display device(s) 108, a separate display, etc.) to visually convey information to the user(s) 150, playing a video, adjusting a device setting, adjusting a content setting, adjusting an audio and/or video output setting or source, retrieving information for the user(s) 150, providing assistance to the user(s) 150, performing or scheduling one or more operations at a device, etc.

In some examples, the AI assistant 130 can use the LLM 132 to generate dialogue and communications for the user(s) 150, respond to questions and/or queries from the user(s) 150, implement actions based on communications between the user(s) 150 and the AI assistant 130 (e.g., via the LLM 132), trigger the media device(s) 106 and/or the display device(s) 108 to perform one or more actions instructed and/or selected by the LLM 132 based on decisions made by the LLM 132 in response to queries and/or communications from the user(s) 150, function as a voice assistant or chat bot to provide information to the user(s) 150 determined by the LLM 132, trigger device operations (e.g., operations by the media device(s) 106, the display device(s) 108, and/or any other device) determined by the LLM 132 based on input speech from the user(s) 150 provided to the LLM 132 by the ASR system(s) 140, configure one or more settings at the media device(s) 106 and/or the display device(s) 108, etc.

For example, the user(s) 150 can use the microphone(s) 112 of the remote control(s) 110 to provide input speech to the media device(s) 106. The input speech in this example can include instructions to control one or more aspects of the media device(s) 106 and/or the display device(s) 108. The remote control(s) 110 can convert the input speech into an audio signal, and provide the audio signal to the media device(s) 106. The media device(s) 106 can provide the audio signal to the ASR system(s) 140, which can process the audio signal to recognize the input speech and generate a text transcript of the input speech. The ASR system(s) 140 can provide the text transcript to the input interface 134, which can use the text transcript (and, optionally, other data from any of the data stores 126 and/or any other sources) to generate an input to the LLM 132 representing the instructions in the input speech in a manner (e.g., format, configuration, structure, protocol, standard, schema, language, arrangement, etc.) that is understood by the LLM 132 (and/or that can be processed by the LLM 132 to generate a corresponding output).

The LLM 132 can use the input from the input interface 134 to determine that the user(s) 150 wants to control one or more aspects of the media device(s) 106 and/or the display device(s) 108, and determine how to control the one or more aspects of the media device(s) 106 and/or the display device(s) 108 accordingly. The LLM 132 can generate an output including, conveying, encoding, representing, and/or specifying instructions for controlling the one or more aspects of the media device(s) 106 and/or the display device(s) 108 as requested by the user(s) 150. The LLM 132 can provide the output to the output interface 138, which can transform the output into a command for the media device(s) 106 and/or the display device(s) 108. The command can include one or more commands that are executable at the media device(s) 106 and/or the display device(s) 108 based on an execution environment (e.g., an operating system) of the media device(s) 106 and/or the display device(s) 108. Moreover, the command can be configured to control the one or more aspects of the media device(s) 106 and/or the display device(s) 108 as requested by the user(s) 150. The media device(s) 106 and/or the display device(s) 108 can receive and execute the command to control the one or more aspects of the media device(s) 106 and/or the display device(s) 108 as requested. In some cases, before providing the output to the output interface 138 to generate the command, the LLM 132 can use the data search interface 136 to query one or more of the data stores 126 for information used to verify that the one or more aspects of the media device(s) 106 and/or the display device(s) 108 can be controlled as requested and/or to obtain information about controlling the one or more aspects of the media device(s) 106 and/or the display device(s) 108. In some examples, the LLM 132 can use some or all of such information to finalize and/or verify its output.

As another example, the user(s) 150 can use the microphone(s) 112 of the remote control(s) 110 to provide a voice input requesting to play a video (e.g., a movie, a TV show, a video broadcast, video content from a streaming or TV channel, etc.) at the display device(s) 108. The remote control(s) 110 can generate an audio signal based on the voice input and provide the audio signal to the display device(s) 108. The display device(s) 108 can provide the audio signal to the ASR system(s) 140, which can process the audio signal to recognize speech in the voice input and generate a text transcript of the speech. The ASR system(s) 140 can provide the text transcript to the input interface 134, which can use the text transcript (and, optionally, other data) to generate an input to the LLM 132. The input to the LLM 132 can include, encode, represent, and/or describe the information used to generate the input (e.g., the text transcript and, optionally, other data). The input can be a type (e.g., configuration, format, structure, protocol, standard, specification, etc.) of input understood by the LLM 132, such as a vector or embedding. The LLM 132 can use the input from the input interface 134 to determine that the user(s) 150 wants to play the video at the display device(s) 108, determine whether the video is available for playback at the display device(s) 108 (e.g., from a local storage and/or from the content server(s) 120), and generate an output responsive to the voice input from the user(s) 150.

If the LLM 132 determines that the video is available, the LLM 132 can generate an output including, encoding, representing, and/or specifying instructions to obtain and play the video at the display device(s) 108. In some cases, the instructions can specify how to obtain the video, how to play the video, any settings for the video, any settings for obtaining the video, and/or any settings for playback of the video. The LLM 132 can provide the output to the output interface 138, which can convert the output into a command that is executable at the display device(s) 108. The command can be configured to trigger the display device(s) 108 to obtain the video from a source (e.g., retrieve from a local or remote storage, stream, tune in to a media channel to receive the video from a media channel, etc.) and play (e.g., display/present, playback, stream, etc.) the video as requested by the user(s) 150. For example, the command can be executed by the display device(s) 108 to obtain and play the video at the display device(s) 108. In some cases, prior to providing the output to the output interface 138, the LLM 132 can use the data search interface 136 to query one or more of the data stores 126 for information to verify that the video is indeed available. If the video is confirmed to be available, the LLM 132 can provide the output to the output interface 138 as previously described. If, upon confirmation, the video is determined not to be available, the LLM 132 can provide an output to the output interface 138 as described below in the example scenario where the video is unavailable.

For example, if the LLM 132 determines that the video is not available, the LLM 132 can generate dialogue informing the user(s) 150 that the video is unavailable (and optionally asking the user(s) 150 if the user(s) 150 wishes to check another media item or perform another action). The LLM 132 can provide, to the output interface 138, an output that includes, encodes, represents, instructs, and/or specifies the dialogue. The output interface 138 can use the output to generate a command executable at the display device(s) 108. The command can be configured to trigger the display device(s) 108 (or another output device) to output the dialogue generated by the LLM 132. The display device(s) 108 (or the other output device) can execute the command and output the dialogue. The display device(s) 108 (or the other output device) can output the dialogue as audio via a speaker(s) device, visually as text displayed at the display device(s) 108 (or the other output device), and/or in any other form.

In some examples, the ASR system(s) 140 can process audio inputs and data as described herein. For example, as noted above, the remote control(s) 110 may include a microphone(s) 112 that can receive audio inputs from the user(s) 150 (as well as other sources, such as the display device(s) 108). In some examples, the media device(s) 106 may be audio responsive, and the audio inputs may represent verbal/voice/speech commands from the user(s) 150 to control the media device(s) 106 and/or other components in the media system(s) 104, such as the display device(s) 108.

In some examples, the audio inputs received by the microphone(s) 112 in the remote control(s) 110 can be transferred to the media device(s) 106, which can then be forwarded to the ASR system(s) 140 for processing. The ASR system(s) 140 may operate to process and analyze the audio inputs to recognize the voice/speech commands of the user(s) 150 in the audio inputs. The ASR system(s) 140 may forward the voice/speech commands to the input interface 134 of the AI assistant 130 for processing. The ASR system(s) 140 can additionally or alternatively forward the voice/speech commands back to the media device(s) 106 for processing.

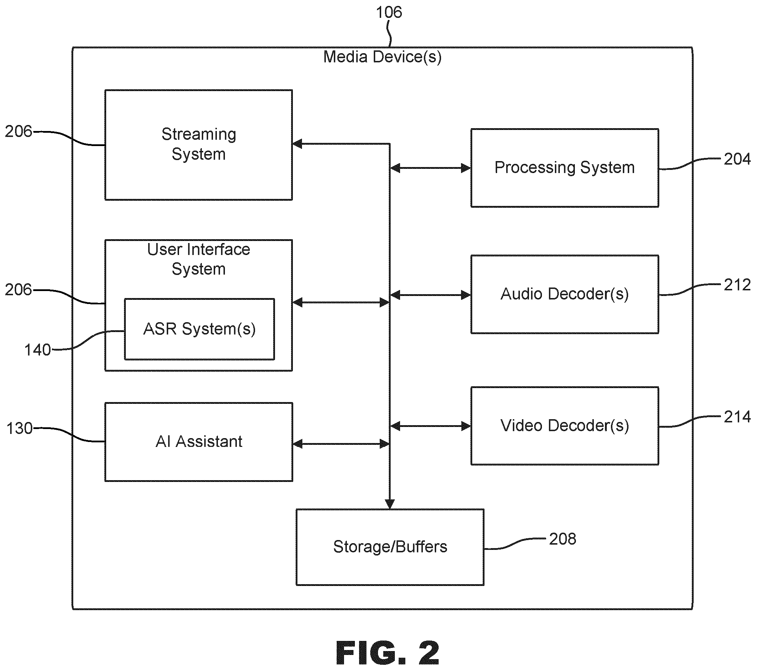

In some examples, the audio inputs may be alternatively or additionally processed and analyzed by a copy or an instance of the ASR system(s) 140 (or a version thereof, such as a local version) in the media device(s) 106 (see FIG. 2) or the display device(s) 108. The media device(s) 106 and the system servers 128 may cooperate to pick any of the voice/speech commands to process (either the voice/speech command recognized by the ASR system(s) 140 in the system servers 128, or the voice/speech command recognized by the copy, instance, or version of the ASR system(s) 140 hosted by the media device(s) 106).

While the various examples herein describe the audio inputs from the user(s) 150 (e.g., speech from the user(s) 150) as being obtained via the microphone(s) 112 in the remote control(s) 110, one of ordinary skill in the art will recognize from the disclosure that such audio inputs can be obtained from the user(s) 150 using a microphone(s) 112 on another device(s), a standalone microphone(s), and/or any other microphone(s) device. In some cases, the data conveyed in the audio inputs from the user(s) 150 can be conveyed using other type of inputs obtained from the user via another type of input device, which can be used by the AI assistant 130 to interact with the user(s) 150 and other devices as described herein. For example, the user(s) 150 can use a keyboard coupled to the media device(s) 106 to type a message with instructions or questions for the AI assistant 130. The media device(s) 106 can relay the message from the user(s) 150 to the AI assistant 130, which can process the message to generate a command based on an output generated by the LLM 132 based on the message from the user(s) 150 (or input data conveying the message and optionally other data).

In some examples, the crowdsource server(s) 128 in the system servers 128 operate to cause closed captioning to be automatically turned on and/or off during streaming of a given media content item, such as a given movie. For example, using information received from the media device(s) 106 in the media system(s) 104 (e.g., in thousands or millions of media systems), the crowdsource server(s) 128 may identify similarities and overlaps between closed captioning requests issued by different users watching a particular movie. Based on such information, the crowdsource server(s) 128 may determine that turning closed captioning on may enhance the users' viewing experience at particular portions of the movie (for example, when the soundtrack of the movie is difficult to hear), and turning closed captioning off may enhance the users' viewing experience at other portions of the movie (for example, when displaying closed captioning obstructs important or relevant visual aspects of the movie). Accordingly, the crowdsource server(s) 128 may operate to cause closed captioning to be automatically turned on and/or off during future streamings of the movie.

FIG. 2 illustrates a block diagram of an example media device, according to some examples of the present disclosure. In FIG. 2, the media device(s) 106 represents a single media device. Moreover, the media device(s) 106 in FIG. 2 may include a streaming system 202, processing system 204, storage/buffers 208, and user interface module 206. As described above, the user interface module 206 may include the ASR system(s) 140. In some cases, the ASR system(s) 140 included in the user interface module 206 in FIG. 2 can be the same as the ASR system(s) 140 in/from the system servers 128 in the multimedia environment 102 shown in FIG. 1. In other cases, the ASR system(s) 140 included in the user interface module 206 in FIG. 2 can be a version of the ASR system(s) 140 in/from the system servers 128 in the multimedia environment 102 shown in FIG. 1. For example, in such cases, the ASR system(s) 140 included in the user interface module 206 in FIG. 2 can be a local version, a client version, standalone version, and/or a lighter version (e.g., a smaller version having a smaller data size; a version with less components, features, functions, modules, libraries, and/or capabilities; a version with less code or a smaller package of code; etc.) of the ASR system(s) 140.

The media device(s) 106 may also include one or more audio decoders 212 and one or more video decoders 214. Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples. The media device 106 can implement other applicable decoders, such as a closed caption decoder.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to, H.263, H.264, H.265, VVC (also referred to as H.266), AVI, HEV, MPEG1, MPEG2, MPEG-TS, MPEG-4, Theora, 3GP, DV, DVCPRO, DVCPRO, DVCProHD, IMX, XDCAM HD, XDCAM HD422, and/or XDCAM EX, to name just some examples.

Now referring to both FIGS. 1 and 2, in some examples, the user(s) 150 may interact with the media device(s) 106 via, for example, the remote control(s) 110. For example, the user(s) 150 may use the remote control(s) 110 to interact with the user interface module 206 of the media device(s) 106 to select content, such as a movie, TV show, music, book, application, game, etc. The streaming system 202 of the media device(s) 106 may request the selected content from the content server(s) 120 over the network 118. The content server(s) 120 may transmit the requested content to the streaming system 202. The media device(s) 106 may transmit the received content to the display device(s) 108 for playback to the user(s) 150.

In streaming examples, the streaming system 202 may transmit the content to the display device(s) 108 in real time or near real time as it receives such content from the content server(s) 120. In non-streaming examples, the media device(s) 106 may store the content received from the content server(s) 120 in storage/buffers 208 for later playback on display device(s) 108.

### Conversational AI For Interacting With Devices

Referring again to FIGs. 1 and 2, the AI assistant 130 (e.g., an instance of the AI assistant 130 implemented by the system servers 128 and/or an instance of the AI assistant 130 implemented by the media device(s) 106) and the ASR system(s) 140 (an instance of the ASR system(s) 140 implemented by the system servers 128 and/or an instance of the ASR system(s) 140 implemented by the media device(s) 106) can operate to receive audio inputs from the user(s) 150, such as speech/voice inputs, generate a transcription of the audio inputs from the user(s) 150, and use the transcription to generate an input to the LLM 132 of the AI assistant 130. The LLM 132 can use the input to answer questions in the audio inputs from the user(s) 150, provide information to the user(s) 150 in response to speech or queries in the audio inputs, generate dialogue with the user(s) 150, provide instructions to the user(s) 150 determined for the user(s) 150 based on the audio inputs, perform actions based on information in the audio inputs, generate commands to control one or more devices based on information in the audio inputs such as device control requests, and/or otherwise interact with the user(s) 150 and/or devices in the multimedia environment 102 based on information in the audio inputs.

For example, the AI assistant 130 and the ASR system(s) 140 can be used to generate LLM-driven dialogue (e.g., dialogue generated by the LLM 132 of the AI assistant 130) for the user(s) 150, make LLM-driven decisions for the user(s) 150, perform/conduct LLM-driven interactions with the user(s) 150, perform LLM driven actions for the user(s) 150, and/or provide LLM-driven commands for controlling one or more devices for the user(s) 150.

The disclosure now continues with a further discussion of automatic speech recognition performed by the ASR system(s) 140 and LLM-driven operations performed by the AI assistant 130.

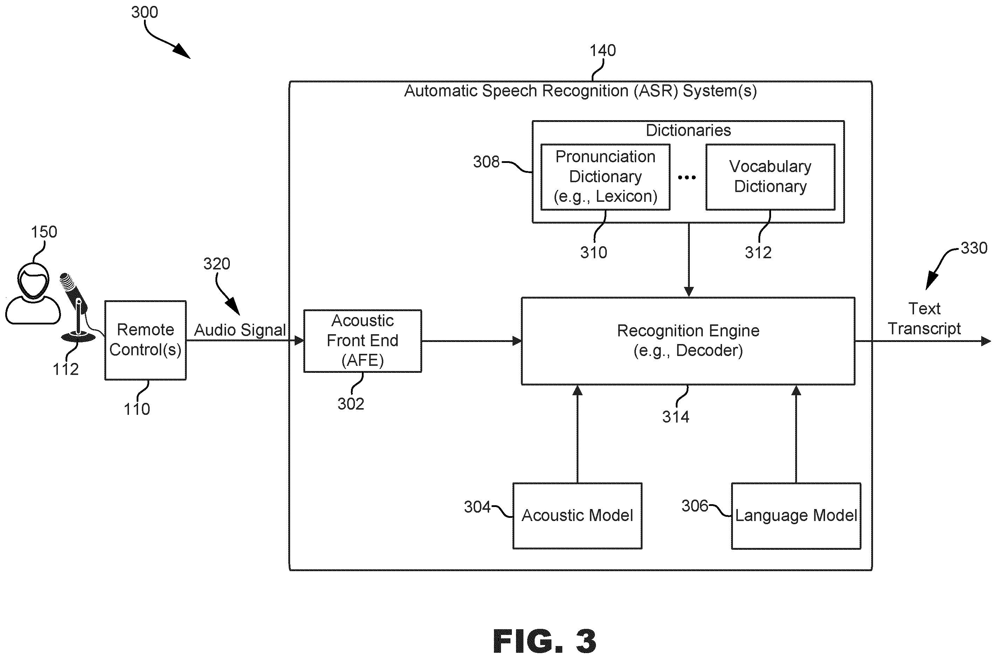

FIG. 3 is a diagram illustrating an example architecture 300 of the example ASR system(s) 140, according to some examples of the present disclosure. In general, the ASR system(s) 140 can analyze and convert spoken language (e.g., speech) into text, such as a text transcription. The ASR system(s) 140 can provide the text transcription to another system, such as the AI assistant 130, as an output of the ASR system(s) 140. The AI assistant 130 can use the text transcription from the ASR system(s) 140 to interact with the user who provided the spoken language to the ASR system(s) 140, such as the user(s) 150.

For example, the LLM 132 of the AI assistant 130 can use the text transcription from the ASR system(s) 140 to recognize speech from the user(s) 150 (e.g., spoken language) in order to generate dialogue or communications for the user(s) 150, provide information to the user(s) 150, perform tasks for or on behalf of the user(s) 150, answer questions from the user(s) 150, request information from the user(s) 150, perform actions or operations in response to speech inputs from the user(s) 150, operate as a voice assistant for the user(s) 150, support interactions between the user(s) 150 and any device implementing or interfacing with the AI assistant 130 (e.g., the media device(s) 106, the display device(s) 108, and/or any other device), respond to voice queries from the user(s) 150, and/or assist the user(s) 150 with anything, among other tasks and applications.

The ASR system(s) 140 can include an acoustic front end (AFE) 302 configured to process and/or pre-process audio inputs (e.g., speech/voice inputs) to the ASR system(s) 140, an acoustic model 304 that can model acoustic patterns of speech in the audio inputs, a language model 306 that can model statistics of language and estimate the probability of a sequence of words or phrases in a given language, one or more dictionaries 308 that can be referenced when recognizing input speech, and a recognition engine 314 (e.g., or decoder) that can recognize speech.

As shown in FIG. 3, the user(s) 150 can provide a voice input to the ASR system(s) 140 via the microphone(s) 112 of the remote control(s) 110. The voice input can include, represent, and/or can also be referred to as a speech or spoken language input from the user(s) 150, an utterance(s) from the user(s) 150, a verbal communication from the user(s) 150, etc. While the user(s) 150 is shown in FIG. 3 as providing the voice input via the microphone(s) 112 of the remote control(s) 110, such input element/device is one non-limiting example provided for illustration purposes. As one of ordinary skill in the art would recognize from this disclosure, in other examples, the user(s) 150 can similarly provide a voice input using any other speech/voice/audio input device, such as any other microphone(s), array of microphones, and/or any other audio recording device(s) or microphone system.

The remote control(s) 110 can use the voice input from the user(s) 150 to generate an audio signal 320 that includes, contains, conveys, and/or encodes the voice input or a representation thereof, such as a digital representation of the voice input. For example, the audio signal 320 generated by the remote control(s) 110 from the voice input recorded by the microphone(s) 112 can include, without limitation, an electrical signal that includes, encodes, and/or represents the voice input from the user(s) 150, such as a digitized audio signal that includes, encodes, and/or represents digitized speech from the voice input; a stream of digitized speech data associated with the voice input; digital audio corresponding to, encoding, and/or representing the voice input from the user(s) 150; and/or an audio asset (e.g., an audio file or content item) containing or encoding the voice input from the user(s) 150 and/or a representation of the voice input from the user(s) 150, such as a digital representation of the voice input from the user(s) 150; or a combination thereof.

For example, in some cases, when the user(s) 150 speaks into the microphone(s) 112 (or within a proximity to the microphone(s) 112), the microphone(s) 112 can record the utterances of the user(s) 150 and convert them into electrical signals. A sound-responsive element of the microphone(s) 112 can capture the utterances of the user(s) 150 as variations in air pressure and convert the utterances into corresponding variations of analog electrical signals, such as direct current or voltage. The remote control(s) 110 can receive the analog electrical signals, which can be sampled such that values of the analog electrical signals are captured at discrete instants of time, and can quantize the analog electrical signals such that the amplitudes of the analog electrical signals are converted at each sampling instant into streams of digital data. As such, the remote control(s) 110 can convert the analog electrical signals into digital electronic signals. In some examples, the audio signal 320 can include or represent such digital electronic signals.

The remote control(s) 110 can provide the audio signal 320 to the AFE 302 as an input to the ASR system(s) 140. The AFE 302 can include an acoustic processor and/or pre-processor element(s), such as an algorithm(s), a model(s), a module(s), a front-end processor(s), a specialized and/or application-specific processor(s), a processing/pre-processing interface(s), and/or the like. The AFE 302 can process and/or pre-process the audio signal 320 to remove noise from the audio signal 320; extract acoustic features from the audio signal 320; determine audio/acoustic characteristics of the audio signal 320; determine which part(s)/segment(s) of the audio signal 320 contain(s) speech or valid speech; transform the audio signal 320 into discrete sequences of acoustic parameters of the speech associated with the audio signal 320, such as feature vectors or time-varying feature vectors; parameterize successive sections/segments of the audio signal 320 to be matched by the recognition engine 314; segment the speech data in and/or represented by the audio signal 320 into overlapping phonetic or acoustic frames, such as frames corresponding to linguistic units such as words or acoustic subwords; etc.

For example, the AFE 302 can extract acoustic features from the audio signal 320 and determine (and analyze) the acoustic characteristics of the audio signal 320. As another example, the AFE 302 can remove noise from the audio signal 320, determine which part(s)/segment(s) of the audio signal 320 contain(s) valid speech, and/or parameterize successive sections of the audio signal 320 to be matched by the recognition engine 314. In some cases, to parameterize successive sections of the audio signal 320, the AFE 302 can extract a section or segment of the audio signal 320, such as a time slice of the audio signal 320, apply a Hamming window, and generate a smoothed spectral representation. The smoothed spectral representation can include, for example and without limitation, an array of numbers defining a polynomial representation of the section or segment of the audio signal 320. In such cases, the AFE 302 can feed the array of numbers to the recognition engine 314, which can process the array of numbers according to the acoustic model 304. The AFE 302 can return to extract the next, potentially overlapping, section or segment from the audio signal 320 and repeat the processing/pre-processing operations/steps described above until all of the audio signal 320 has been processed/pre-processed.

As yet another example, the AFE 302 can transform speech data in the audio signal 320 into discrete sequences of acoustic parameters. In some cases, the AFE 302 can segment the speech data into overlapping phonetic or acoustic frames, which can correspond (e.g., the frames can correspond) to linguistic units such as, for example and without limitation, syllables, demi-syllables, phones, diphones, triphones, phonemes, words, or any other language unit or acoustic subword unit. The AFE 302 can perform phonetic analysis to extract acoustic parameters from the speech data within each frame, such as feature vectors (e.g., time-varying feature vectors, etc.) from the speech data from within each frame. In some examples, utterances within the speech of the user(s) 150 can be represented as sequences of such feature vectors. To illustrate, the AFE 302 can extract feature vectors from the audio signal 320, which can include, for example and without limitation, vocal pitch, energy profiles, spectral attributes, cepstral coefficients obtained by performing Fourier transforms of the frames and decorrelating acoustic spectra using cosine transforms, and/or the like. The utterances in the speech from the user(s) 150 can be represented as sequences of such feature vectors.

The AFE 302 can provide an output(s) of the AFE 302 (e.g., acoustic features or feature vectors, etc.) to the recognition engine 314, which can recognize the speech from the user(s) 150 and generate a text transcription 330. Thus, the output(s) of the AFE 302 can be used as an input(s) to the recognition engine 314. In some examples, the output(s) of the AFE 302 can include acoustic features or feature vectors generated based on the audio signal 320. The acoustic model 304 can model acoustic patterns of speech. In general, an acoustic model such as the acoustic model 304 can include or generate a statistical representation of the relationship between audio signals and the linguistic units (e.g., phonetic units like phonemes or triphones) they represent. In other words, an acoustic model such as the acoustic model 304 can model the relationship between an audio signal and units of language, such as phonetic units of language. For example, the acoustic model 304 can model a sequence of phones or phonemes associated with the audio signal 320.

The recognition engine 314 can use statistical pattern recognition techniques to recognize speech and generate a text transcription of the recognized speech. For example, the recognition engine 314 can identify the phonemic contents in an utterance from the speech input of the user(s) 150. The recognition engine 314 can use the output(s) from the AFE 302, such as the acoustic features or feature vectors generated from the audio signal 320, to recognize the speech from the user(s) 150 and output a text transcript 330 of the speech from the user(s) 150. The recognition engine 314 can also use the acoustic model 304, the language model 306, and any of the dictionaries 308 to recognize the speech from the user(s) 150 and generate the text transcript 330.

The acoustic model 304 can assist the recognition engine 314 with selecting the most likely linguistic units (e.g., words or subword units such as phonemes, triphones, etc.) corresponding to the input(s) to the recognition engine 314 from the AFE 302 (e.g., the output(s) from the AFE 302 used as an input(s) to the recognition engine 314). As previously noted, the input(s) to the recognition engine 314 from the AFE 302 (e.g., the output(s) from the AFE 302) can include, for example, acoustic features or feature vectors generated by the AFE 302 from the audio signal 320. Thus, in some examples, the acoustic model 304 can assist the recognition engine 314 with selecting the most likely linguistic units corresponding to the acoustic features or feature vectors from the AFE 302.

To illustrate, in some cases, the acoustic model 304 can receive the acoustic features or feature vectors from the AFE 302 and determine the correct word or the correct linguistic units (e.g., phonemes) associated with the acoustic features or feature vectors from the AFE 302. When performing continued speech recognition, the acoustic model 304 can receive an input sequence (e.g., a sequence of features or feature vectors) from the AFE 302, and output a sequence of linguistic units (e.g., phonemes) corresponding to the input sequence.

In some examples, the acoustic model 304 can be used to predict which sound or linguistic unit (e.g., phoneme) is being spoken at each speech segment or acoustic frame associated with the audio signal 320. In some aspects, the acoustic model 304 can map speech utterances associated with the speech from the user(s) 150 to linguistic units such as phones, phonemes, triphones, syllables, words, or the like.

The acoustic model 304 can include or represent one or more models such as, for example and without limitation, one or more Hidden Markov Models (HMMs), Gaussian Mixture Models (GMMs), HMM-GMM models, deep neural network (DNN) models (e.g., convolutional neural networks (CNNs) or any other artificial neural network models), and/or hybrid HMM-DNN models. In some cases, the acoustic model 304 can be learned from audio recordings and corresponding transcripts. For example, the acoustic model 304 can be created, refined, and/or trained by taking audio recordings of speech and their text transcriptions, using software to create statistical representations of the sounds that make up each word in the audio recordings and text transcriptions.

The language model 306 can include or represent a probabilistic model of a natural language. For example, the language model 306 can include, without limitation, a word n-gram language model, a skip-gram model, or a neural network-based language model such as a recurrent neural network-based model or a large language model. The language model 306 can model the statistics of language and/or model word sequences in a language. In some cases, the language model 306 can estimate the probability of a sequence of words or phrases in a given language, and help the recognition engine 314 predict the most likely word sequence from the speech input of the user(s) 150 or the audio signal 320 associated with the speech input from the user(s) 150. The language model 306 can thus help improve the accuracy and/or fluency of the transcriptions generated by the recognition engine 314, such as the text transcription 330.

For example, the language model 306 can learn which sequences of words are most likely to be spoken, and predict which words will follow from a current word(s) and with what probability. In some cases, the language model 306 can assign a probability estimate to word sequences, and define what a speaker may say, the vocabulary, and/or the probability over possible sequences.

The one or more dictionaries 308 may be used or referenced by the recognition engine 314 to help recognize the speech from the user(s) 150 and generate the text transcript 330. In this example, the one or more dictionaries 308 include a pronunciation dictionary 308 (also referred to as a lexicon) and a vocabulary dictionary 312 (or grammar). The pronunciation dictionary 308 can describe how words in a language are pronounced phonetically. The pronunciation dictionary 308 can include or represent a repository of pronunciations of phones and/or phonemes that may be included in an input word or phrase within the vocabulary dictionary 312. In some examples, the pronunciation dictionary 308 can define the phonemes in a natural language.

The vocabulary dictionary 312 can include or represent a vocabulary of a particular language. For example, the vocabulary dictionary 312 can include a list of words and phrases to be recognized by the recognition engine 314. In some cases, the vocabulary dictionary 312 may also contain bits of programming logic to aid an ASR application. The pronunciation dictionary 310 and the vocabulary dictionary 312 are a few non-limiting examples of dictionaries that can be used by the ASR system(s) 140, provided in FIG. 3 for illustrative purposes. One of ordinary skill in the art will recognize from the disclosure that the ASR system(s) 140 can use other dictionaries that are not shown in FIG. 3, either in addition to or instead of any of the dictionaries in FIG. 3.

In some cases, the recognition engine 314 can take a spoken utterance, compare it to the vocabulary dictionary 312, and match the utterance to any corresponding vocabulary words. In some aspects, the recognition engine 314 can compare and contrast the acoustic features or feature vectors of a linguistic unit (e.g., a subword such as a phoneme) to be recognized by the recognition engine 314, with stored models and/or patterns (e.g., the acoustic model 304, the language model 306, any of the dictionaries 308, a linguistic model such as a subword model, etc.), and assess the differences or similarities (and/or the magnitude of the differences or similarities) between them, and use decision logic to choose a best matching linguistic unit (e.g., subword) from the models as the recognized linguistic unit (e.g., subword).

In some aspects, the recognition engine 314 can statistically select textual patterns that best represent the speech signal. In some cases, the selected patterns and a list of candidates can indicate the likelihood that any mapped candidates correctly match the utterance(s) in the speech signal.

The recognition engine 314 can include any software, processor and/or processing circuitry (e.g., processor, processor core, system-on-chip, application-specific integrated circuit, field-programmable gate array (FPGA), integrated circuit, etc.), AI model (e.g., neural network model, etc.), algorithm, application, software service, software module, software code/logic, statistical model, system (e.g., server, computer, etc.), network (e.g., cloud, datacenter, etc.), software and/or hardware element, and/or component configured to perform speech recognition.

Moreover, the components of the ASR system(s) 140 shown in FIG. 3 are non-limiting, illustrative examples provided for explanation purposes. One of ordinary skill in the art will recognize from the disclosure that, in other examples, the ASR system(s) 140 can include more or less components than shown in FIG. 3, and can include other components that are not shown in FIG. 3, such as any other component that can be used for automatic speech recognition.

FIG. 4 is a diagram illustrating an example process 400 for using a conversational AI system to enable interactions between users and devices. In this example, the user(s) 150 first records speech 402 using the microphone(s) 112 of the remote control(s) 110. However, in other examples, the user(s) 150 can provide the speech 402 via any other recording device, such as any other microphone (or microphone array) or audio recording device, including a standalone microphone or audio recording device or a microphone or audio recording device implemented by another device such as, for example and without limitation, a computer, a mobile device (e.g., a smartphone, a smart wearable device, etc.), a television, a gaming system, a security system, an HMD, a vehicle, an elevator, an appliance, a smart tool, a robotic device, a networking device, an Internet-of-Things (IoT) device, a peripheral device, and/or any other device.

The speech 402 can be used by the user(s) 150 to interact with the media device(s) 106 via the AI assistant 130, as further described herein. The speech 402 can include any speech or utterance(s) such as, for example and without limitation, a question, a query, a command, a response to a question or query, a statement, a request, dialogue, and/or any other speech for the AI assistant 130 and the media device(s) 106. In FIG. 4, the speech 402 and the AI assistant 130 are used for the user(s) 150 to interact with the media device(s) 106. However, in other examples, the speech 402 and the AI assistant 130 can be used for the user(s) 150 to interact with any other device or combination of devices, such as the display device(s) 108 and/or any other device.

The remote control(s) 110 can generate an audio signal 404 based on the speech 402. The remote control(s) 110 can generate the audio signal 404 as previously described with respect to FIG. 3. The audio signal 404 can include, represent, encode, and/or convey the speech 402 or a representation of the speech 402, such as a digitized audio signal representation of the speech 402.

The remote control(s) 110 can provide the audio signal 404 to the media device(s) 106, which can then provide the audio signal 404 to the ASR system(s) 140 for recognition and transcription. However, in other examples, rather than (or in addition to) providing the audio signal 404 to the media device(s), the remote control(s) 110 can provide the audio signal 404 to the ASR system(s) 140.

The ASR system(s) 140 can receive the audio signal 404 and generate a text transcript 406 of the speech 402 associated with the audio signal 404. The ASR system(s) 140 can recognize the speech 402 associated with the audio signal 404 and generate the text transcript 406 as previously described with respect to FIG. 3. The ASR system(s) 140 can then provide the text transcript 406 to the input interface 134 of the AI assistant 130.

In some cases, in addition to providing the audio signal 404 to the ASR system(s) 140, the media device(s) 106 can provide context data 408 (or a portion thereof) to the input interface 134. In some cases, the media device(s) 106 can provide the context data 408 (or a portion thereof) to the input interface 134 automatically upon receiving the audio signal 404 from the remote control(s) 110, automatically upon sending the audio signal 404 to the ASR system(s) 140, or in response to a request for context data from the input interface 134.

The input interface 134 can obtain the context data 408 from the media device(s) 106, the context data store 126A, or both. For example, in some cases, the input interface 134 can obtain a portion of the context data 408 from the media device(s) and another portion of the context data 408 from the context data store 126A. The context data 408 can include any context information about the media device(s) 106, the display device(s) 108 coupled to the media device(s) 106 (and/or any other device coupled to the media device(s) 106), the user(s) 150, an environment of the media system(s) 104 associated with the media device(s) 106, the multimedia environment 102, a service associated with the user(s) 150 and/or the media device(s) 106, media content associated with the user(s) 150 and/or the media device(s) 106, and/or any other context information.

For example, in some cases, the context data 408 can include information about what (if anything) is being played or displayed by the media device(s) 106 (or the display device(s) 108 coupled to the media device(s) 106), such as a movie, TV show, video, channel, broadcast, or image presented on a screen associated with the media device(s) 106; a state of the media device(s) 106 (e.g., applications installed and/or running on/at the media device(s) 106, services running on/at the media device(s) 106, a configuration of the media device(s) 106, any queue at the media device(s) 106, a location and/or position of the media device(s) 106 within a scene/environment, any settings of/at the media device(s) 106, any task(s) or operation(s) performed or being performed by the media device(s) 106, and/or any other state information); capabilities of the media device(s) 106 (e.g., display capabilities, processing capabilities, media capabilities, output capabilities, audio capabilities, software capabilities, recognition capabilities, computer vision capabilities, AI capabilities, input capabilities, storage capabilities, data capabilities, etc.); a model and/or device type of the media device(s) 106; network information; any preferences configured at the media device(s) 106 (e.g., user preferences, system preferences, sound preferences, video preferences, assistance preferences, configuration preferences, media preferences, etc.); what channels, platforms, services, and/or applications are installed (and/or available) at the media device(s) 106 and/or a software or media platform at the media device(s) 106; a screenshot of a screen associated with the media device(s) 106; an input status; a current seek position; a current playback status; what content is available at the media device(s) 106; a parameter(s) of the media device(s) 106; a profile of the user(s) 150; and/or any other context information.

The input interface 134 can also (optionally) obtain historical data 410 from the historical data store 126B. The historical data 410 can include any historical information about the user(s) 150, the media device(s) 106, interactions and/or conversations between the user(s) 150 and the AI assistant 130, queries from the user(s) 150, answers provided to the user(s) 150, requests by the user(s) 150, feedback from the user(s) 150, inputs from the user(s) 150, speech from the user(s) 150, outputs to the user(s) 150, statistics associated with interactions with the user(s) 150, interactions between the user(s) 150 and the media device(s) 106 (and/or other devices), usage information associated with the media device(s) 106, logged data associated with the AI assistant 130, statistics associated with the AI assistant 130, a snapshot of previous interactions and/or tasks associated with the AI assistant 130, and/or any other historical data.

In some examples, the input interface 134 can include an interface, such as an application programming interface (API), used to communicate data to the LLM 132 of the AI assistant 130. In some cases, the input interface 134 can include an algorithm, a software service, a software model, a computer device, a communication system, and/or any hardware and/or software other component. The input interface 134 can be configured to generate an input to the LLM 132 of the AI assistant 130 based on the data obtained by the input interface 134.

For example, the input interface 134 can use the text transcript 406, the context data 408, and optionally the historical data 410 to generate input data 412 for the LLM 132 of the AI assistant 130. The input data 412 can represent an input to the LLM 132, and can include any portion and/or representation of the text transcript 406, the context data 408, and optionally the historical data 410. The input data 412 can include any other data such as, for example and without limitation, a processing request or requested operation for the LLM 132 of the AI assistant 130, a parameter(s) to be used or followed by the LLM 132, a preference(s) associated with a requested operation, etc.

In some cases, to generate the input data 412, the input interface 134 can convert or transform the text transcript 406, the context data 408, and optionally the historical data 410 into an input understood by or customized for the LLM 132 of the AI assistant 130. For example, the input interface 134 can convert or transform the text transcript 406, the context data 408, and optionally the historical data 410 into an input having a format, structure, schema, configuration, specification, and/or content understood by and/or customized for the LLM 132. In some examples, the input interface 134 can transform the text transcript 406, the context data 408, and optionally the historical data 410 into an input configured according to or a defined by a protocol or standard for inputs associated with the LLM 132.

In some examples, the input interface 134 can include or represent an API designed to communicate input data to the LLM 132 of the AI assistant 130 using a protocol specified and/or designed for the LLM 132 and/or a specific domain, such as a TV domain or a media domain. The protocol and the input data 412 can allow the LLM 132 to understand what is being requested and/or communicated by the user(s) 150, the context of the media device(s) 106 (e.g., what content is being played or presented on a screen associated with the media device(s) 106, what channel is playing or on at the media device(s) 106, what media application is running at the media device(s) 106, an input status at the media device(s) 106, a current seek position, any channels and/or applications installed and/or available at the media device(s) 106, capabilities of the media device(s) 106, a task or operation at the media device(s) 106, etc.), any historical information that is relevant to a request and/or communication from the user(s) 150 (e.g., the same or similar requests made by the user(s) 150 and/or other users in the past, previous interactions, previous responses, etc.), a screenshot associated with the media device(s) 106, and/or any other relevant information for responding to the user(s) 150 and/or triggering an action in response to the speech 402 from the user(s) 150. An understanding of such information can help the LLM 132 determine what to do and/or how to respond to the input data 412.

The LLM 132 can receive the input data 412 from the input interface 134 and determine what to do in response to the input data 412, such as what action to take, what command to trigger at the media device(s) 106 and/or the display device(s) 108, what dialogue to generate, what questions (e.g., follow up questions, etc.) to ask the user(s) 150, what information and/or answer to provide the user(s) 150, how to respond to the user(s) 150, what output to generate, etc. In some examples, the LLM 132 can make multiple decisions/determinations, generate multiple outputs, and/or perform multiple actions in parallel, which can improve the user experience by reducing latencies/delays and increasing the performance of the overall system.

In determining what to do in response to the input data 412, the LLM 132 can determine, understand, and take into account any relevant context and/or historical information conveyed or encoded in the input data 412. For example, the LLM 132 can be trained to understand context and other auxiliary information, such as historical information, from inputs similar to the input data 412 (e.g., inputs containing similar types of data, details, etc.), and can extract and understand context information and other information, such as historical information, from inputs. The LLM 132 can be trained to leverage, and can perform well at leveraging, any context information and historical information extracted and understood from inputs to the LLM 132, in order to make determinations/decisions, implement actions, generate responses and/or formulate outputs.

In some examples, the LLM 132 can use the input data 412 to determine what the user(s) 150 needs/wants or is asking for, as indicated in the speech 402 from the user(s) 150, and how to respond to the input data 412. In understanding what the user(s) 150 needs/wants or is asking for and how to respond, the LLM 132 can leverage any context information and/or historical information determined by the LLM 132 based on the input data 412. For example, the LLM 132 can process the input data 412 to determine and understand how to respond to the user(s) 150, what decisions to make based on the information in the speech 402 from the user(s) 150, the relevant context of the user(s) 150 and/or the media device(s) 106 (and anything else), and any relevant information from previous interactions with the user(s) 150 (and/or other users) such as previous responses, results, dialogue, answers, and/or actions determined and/or implemented by the LLM 132 in response to the same or similar interactions with the user(s) 150 (and/or other users) in the past. This information can help the LLM 132 make any decisions, implement any actions, generate any responses, and/or formulate any outputs in response to the input data 412.

In making a decision and/or determining an output (e.g., a response, an action, a dialogue, a request, and/or any other output) based on the input data 412, the LLM 132 can query any of the search tools 430 for information that the LLM 132 can use to confirm the decision and/or output, supplement the decision and/or output with additional information, and/or revise the decision and/or output. For example, to ensure that the decision and/or output from the LLM 132 is not incorrect or hallucinated by the LLM 132, the LLM 132 can query any of the search tools 430 for information that the LLM 132 can use to confirm that the decision and/or output is correct/accurate and/or complete.

To illustrate, if the LLM 132 determines that the input data 412 includes a question from the user(s) 150 asking whether a movie is available for playback via the media device(s) 106. The LLM 132 can determine whether the movie is available and query one or more of the search tools 430 for information about the movie that the LLM 132 can use to verify its determination regarding whether the movie is available. For example, the LLM 132 can send a search request 414 to the data search interface 136. The search request 414 can include a request to the data search interface 136 asking the data search interface 136 to query one or more of the search tools 430 for information indicating whether the movie is available. In some cases, the search request 414 can also indicate which search tool(s) from the search tools 430 the data search interface 136 should query for such information. The data search interface 136 can send a query 416 to one or more search tools from the search tools 430 indicated by the LLM 132, such as any of the content data stores 126C-126N and/or the remote source(s) 432. The remote source(s) 432 can include, for example and without limitation, the Internet, a remote network, a remote database, another data store, a data repository, and/or any other data stores, networks, providers, and/or sources.

The data search interface 136 can receive a search result(s) 418 from each search tool queried, and provide a search response 420 to the LLM 132. The search response 420 can include each search result obtained from each search tool queried or a search response generated from each search result obtained, such as a search response aggregating information from all search results obtained or a search response formulated using data from multiple search results. The LLM 132 can use the search response 420 to verify a decision and/or output determined by the LLM 132, revise the decision and/or output determined by the LLM 132, add more information to the decision and/or output determined by the LLM 132, determine whether the decision and/or output determined by the LLM 132 should be revised or withdrawn, and/or determine whether the LLM 132 should generate dialogue to request more information and/or inputs from the user(s) 150 to determine or finalize the decision and/or output from the LLM 132.

The data search interface 136 can include or represent an interface for communicating with the search tools 430, such as an API(s). In some cases, the data search interface 136 can include logic for processing and/or revising data in search requests from the LLM 132 and/or data in search results from the search tools 430. For example, the data search interface 136 can include one or more algorithms, models, applications, software functions, and/or software components configured to process data from the LLM 132 and/or data from the search tools 430.

Once the LLM 132 has generated an output(s) 422 based on the input data 412 (and, if applicable, the search response 420 from the data search interface 136), the LLM 132 can provide the output(s) 422 to the output interface 138. The output interface 138 can be configured to determine any action corresponding to the output(s) 422, and generate a command(s) 424 used to trigger one or more target devices, such as the media device(s) 106 and/or the display device(s) 108, to perform such action.

The command(s) 424 can include one or more commands that are executable at a target device(s) for the command(s) 424, such as the media device(s) 106. For example, the command(s) 424 can include one or more commands that are executable in an executing/compute environment (e.g., the operating system) of the target device(s), such as the media device(s) 106. Moreover, the command(s) 424 can be configured to trigger the target device(s) for the command(s) 424 to perform one or more tasks, actions, operations, steps, and/or processes included in, instructed by, represented in, and/or determined from the output(s) 422. To illustrate if the output(s) 422 includes a message to be displayed by the media device(s) 106 and a task (and/or an instruction for a task) to play a media content item at the media device(s) 106 and change a setting of the media device(s) 106, the command(s) 424 can include code that is executable at the media device(s) 106 (e.g., based on the executing environment of the media device(s) 106, such as the operating system) to display the message and perform the task to play the media content item and change the setting of the media device(s) 106.

In some examples, the output interface 138 can include an interface, such as an API, to communicate between the LLM 132 and other devices, such as the media device(s) 106. In some cases, the output interface 138 can include logic for converting the output(s) 422 from the LLM 132 into one or more commands that are executable at one or more target devices, such as the media device(s) 106. For example, the output interface 138 can include one or more algorithms, models (e.g., neural network models, text-to-speech models, computer vision models, etc.), software functions, services, portions of code, applications, and/or software tools for generating the command(s) 424 and any other data included with the command(s) 424.

The output interface 138 can generate the command(s) 424 based on the output(s) 422 from the LLM 132 and provide the command(s) 424 to one or more target/destination devices, such as the media device(s) 106. For example, assume that the media device(s) 106 is a smart TV and the context of the smart TV indicates that the smart TV is playing a movie. If the output(s) 422 includes an instruction to increase a volume of the movie playing on the smart TV, the output interface 138 can convert the instruction to increase the volume of the movie into a command(s) 424 for the smart TV to increase the volume of the movie (e.g., by modifying an output setting of a speaker device(s) used by the smart TV to output sound from the movie in order to increase the volume of the sound of the movie output by the speaker device(s) of the smart TV). The output interface 138 can provide the command(s) 424 to the smart TV, which can execute the command(s) 424 to increase the volume of the movie (e.g., by increasing an output setting of the speaker device(s) used by the smart TV to output the sound of the movie).

As another example, if the output(s) 422 includes a message and an instruction to convert the message into speech, the output interface 138 can convert the output(s) 422 into a command(s) 422 configured to trigger the media device(s) 106 to convert the message to speech (e.g., via text-to-speech), and output the speech using one or more speaker devices. The output interface 138 can provide the command(s) 424 to the media device(s) 106 for execution to output the speech.

The example process 400 can be implemented on an individual basis (e.g., per input from the user(s) 150) and/or iteratively. For example, the process 400 can be implemented in multiple iterations to provide an intelligent conversational/dialogue system for interacting with the user(s) 150 on behalf of the media device(s) 106 and/or the display device(s) 108, obtain additional or follow up information from the user(s) 150, revise actions, decisions, and/or outputs generated by the LLM 132 in response to one or more inputs from the user(s) 150, etc. Moreover, the process 400 can be performed to implement device commands in response to speech inputs from the user(s) 150, allow the user(s) 150 to search items (e.g., content, settings, channels, applications, controls, programming schedules, etc.) using voice searches, execute or trigger actions using voice inputs, receive or retrieve information using voice inputs, and/or interact in any way with the media device(s) 106 and/or the display device(s) 108 via the LLM 132 and voice inputs. A few illustrative and non-limiting example use cases for the process 400 are further described below.

In one illustrative example, assume that the speech 402 from the user(s) 150 includes the utterance "Movie X", which represents a command to play a movie with the movie title "Movie X". The remote control(s) 110 generates the audio signal 404 based on the utterance "Movie X", and sends the audio signal 404 to the ASR system(s) 140. The audio signal 404 here can include or encode the utterance "Movie X" or a representation of the utterance. The ASR system(s) 140 can generate the text transcript 406, which in this example includes the text "Movie X", and send the text transcript 406 to the input interface 134. The media device(s) 106 and/or the context store 126A can also provide context data 408 to the input interface 134, such as information about what content is being displayed (e.g., is playing, etc.) on a screen associated with the media device(s) 106 (e.g., a screen of the media device(s) 106 or a screen of the display device(s) 108 coupled to the media device(s) 106), what channels are installed on the media device(s) 106, any media and/or user preferences, a state of the media device(s) 106, capabilities of the media device(s) 106 and/or a display coupled to and used by the media device(s) 106, and/or any other context information.

Also, the input interface 134 can optionally obtain historical data 410 from the historical data store 126B. The input interface 134 can then generate the input data 412 for the LLM 132 based on the text transcript 406, the context data 408, and the historical data 410 (if the historical data 410 is obtained by the input interface 134 from the historical data store 126B). The input data 412 can include or specify the text in the text transcript 406, the context information in the context data 408, and the information in the historical data 410 (if the historical data 410 is include in the input data 412) in a format, structure, and/or configuration understood by the LLM 132, such as a configuration for inputs to the LLM 132.

Based on the input data 412, the LLM 132 can determine that the user(s) 150 wants to play "Movie X" at the media device(s) 106. The LLM 132 can decide to search the search tools 430 for the "Movie X" to verify that the movie is available. For example, the LLM 132 can search the search tools 430 for available content matching (or having a similarity to) the keyword "Movie X". The LLM 132 can generate the search request 414 for the data search interface 136. The search request 414 can include the keyword "Movie X" and a request to search a particular source from the search tools 430. For example, the search request 414 can instruct the data search interface 136 to search the content data store 126C, which can include and/or identify the content available for the user(s) 150, and the programming data store 126F, which can include a TV guide of channels and content scheduled for the different channels. In some cases, the search request 414 can optionally include any other relevant information and/or can identify a different source(s) to search from the search tools 430 (e.g., in addition to or instead of the content data store 126C and/or the programming data store 126F).

The data search interface 136 can convert the search request 414 to the query 416. In some examples, the query 416 can include a call to search/query the content data store 126C and the programming data store 126F for the keyword "Movie X" and return results based on the search. The data search interface 136 can then receive the search result(s) 418 from the content data store 126C and the programming data store 126F. The search result(s) 418 can indicate whether the "Movie X" is available (e.g., was found in the content data store 126C and/or the programming data store 126F). The data search interface 136 can use the search result(s) 418 to provide the search response 420 to the LLM 132 indicating whether the "Movie X" is available. In some cases, if the "Movie X" is available, the search response 420 can optionally specify where the "Movie X" is available, such as a source and/or location of the "Movie X".

The LLM 132 can process the search response 420 and determine whether the "Movie X" is available. If the "Movie X" is available, the LLM 132 can decide to trigger the media device(s) 106 to obtain the "Movie X" and initiate playback of the "Movie X".

The LLM 132 can generate the output(s) 422 based on its decision, and provide the output(s) 422 to the output interface 138. If the LLM 132 determined that the "Movie X" is not available, the output(s) 422 can instruct the output interface 138 to generate a command for the media device(s) to output a visual and/or audio message to the user(s) 150 indicating that the "Movie X" is not available. In this example, the command can additionally cause the media device(s) to output other visual and/or audio information, such as a visual or audio message asking the user(s) 150 if the user(s) 150 wishes to search and play another content, such as another movie, or if the user(s) 150 wishes to be notified once the "Movie X" becomes available. On the other hand, if the LLM 132 determined that the "Movie X" is available, the output(s) 422 can instruct the output interface 138 to generate a command for the media device(s) to play the "Movie X".

The output interface 138 can use the output(s) 422 from the LLM 132 to generate the command(s) 424 to execute the action instructed, included, and/or represented in the output(s) 422 from the LLM 132, such as playing the "Movie X" if the movie is available, or outputting a message stating that the "Movie X" is not available if the movie was determined to be unavailable. The output interface 138 can generate the command(s) 424 in a format, language, configuration, etc., that is compatible with the device and execution environment (e.g., operating system) where the command(s) 424 is to be executed, such as the media device(s) 106. For example, if the media device(s) 106 is a television having a particular operating system (OS), the command(s) 424 can represent a command(s) executable by the television having the particular OS.

The media device(s) 106 can receive the command(s) 424 from the output interface 138 and execute the command(s) 424 to perform the action instructed by the command(s) 424, such as playing the "Movie X" or outputting a message stating that the "Movie X" is not available (e.g., displaying the message and/or outputting the message via a speaker device as an audible/voice message). If the command(s) 424 instructs the media device(s) 104 to output such message or if the user(s) 150 wishes to initiate another interaction with the media device(s) 106 (e.g., via the AI assistant 130), the user(s) 150 can provide additional speech to be processed as previously described. In this way, various iterations of the process 400 can be implemented to allow the user(s) 150 to engage in dialogue and/or multiple rounds of conversation with the media device(s) 106 through the AI assistant 130 and the LLM 132 of the AI assistant 130.

In another illustrative example, assume that the speech 402 from the user(s) 150 includes the utterance "volume up", which represents a command to increase the volume of the content played by or at the media device(s) 106. The remote control(s) 110 generates the audio signal 404 based on the utterance "volume up", and sends the audio signal 404 to the ASR system(s) 140. The audio signal 404 here can include or encode the utterance "volume up" or a representation of the utterance. The ASR system(s) 140 can generate the text transcript 406, which in this example includes the text "volume up", and send the text transcript 406 to the input interface 134. The media device(s) 106 and/or the context store 126A can also provide context data 408 to the input interface 134, and the historical data store 126B can optionally provide historical data 410 to the input interface 134.

The input interface 134 can then generate the input data 412 based on the text transcript 406, the context data 408, and optionally the historical data 410. The input interface 134 can provide the input data 412 to the LLM 132, which can determine that the user(s) 150 wants to increase the volume of the content playing at (or by) the media device(s) 106. The LLM 132 can generate and send the output(s) 422 to the output interface 138. The output(s) 422 in this example can include an instruction to turn the volume up of the content playing at (or by) the media device(s) 106.

The output interface 138 can use the output(s) 422 to generate a command(s) 424 configured to trigger the media device(s) to increase the volume of the content being played by the media device(s) 106. For example, the command(s) 424 can trigger the media device(s) 106 to increase the volume in the volume settings of the media device(s) 106 and/or a speaker device used to output the audio portion of the content playing at (or by) the media device(s) 106.

The media device(s) 106 can then receive and execute the command(s) 424 to turn the volume up as requested by the user(s) 150.

In another illustrative example, assume that the speech 402 from the user(s) 150 includes the question "when is XYZ show live?". The remote control(s) 110 can generate the audio signal 404 based on the question "when is XYZ show live?", and send the audio signal 404 to the ASR system(s) 140. The audio signal 404 here can include or encode the question "when is XYZ show live?" or a representation of the question. The ASR system(s) 140 can generate the text transcript 406, which in this example includes the text "when is XYZ show live?", and send the text transcript 406 to the input interface 134. The media device(s) 106 and/or the context store 126A can also provide context data 408 to the input interface 134, and the historical data store 126B can optionally provide historical data 410 to the input interface 134.

The input interface 134 can generate the input data 412 based on the text transcript 406, the context data 408, and optionally the historical data 410. The input interface 134 can provide the input data 412 to the LLM 132. The LLM 132 can process the input data 412 and determine to search for the "XYZ show" in the search tools 430. The LLM 132 can also determine which search tools to search for the "XYZ show". For example, since the question from the user asked for when the "XYZ show" will be available live, the LLM 132 can select to search the programming data store 126F, which can contain the programming scheduled at one or more channels, including any live programming scheduled at any of the one or more channels.

The LLM 132 can generate the search request 414 for the data search interface 136, which the data search interface 136 can convert into the query 416 used to search for the schedule for the "XYZ show". For example, the data search interface 136 can convert the search request 414 into a call to the programming data store 126F that queries the programming data store 126F for the schedule of the "XYZ show".

The programming data store 126 provides the search result(s) 418 to the data search interface 136, which can include the schedule (if any) for the "XYZ show". The data search interface 136 can use the search result(s) 418 to provide a search response 420 to the LLM 132, identifying the schedule (if any) for the "XYZ show". The LLM 132 can use the search response 420 to determine when a live transmission of the "XYZ show" is scheduled (if at all). The LLM 132 can also determine the installed or available channels at the media device(s) 106 (e.g., based on information from the context data 408 included in the input data 412). Assuming that a live transmission of the "XYZ show" is scheduled on a channel installed at the media device(s) 106, the LLM 132 can use the schedule of the live transmission of the "XYZ show" and the information about the channels installed or available at the media device(s) 106 to generate an output(s) 422 for generating a text-to-speech (TTS) message indicating that a live transmission of the "XYZ show" is scheduled at a particular time on a particular channel installed at the media device(s) 106.

The output interface 138 can receive the output(s) 422 from the LLM 132, and generate the command(s) 424, which in this example can be configured to execute at the media device(s) 106 to trigger the TTS message indicating that a live transmission of the "XYZ show" is scheduled at a particular time on a particular channel installed at the media device(s) 106. The media device(s) 106 can receive and execute the command(s) 424, which can trigger the media device(s) to output (e.g., via a speaker device) a spoken audio (e.g., a voice/audible message) indicating that a live transmission of the "XYZ show" is scheduled at a particular time on a particular channel installed at the media device(s) 106.

In another illustrative example, assume that the user(s) 150 is watching a movie on the media device(s) 106 and the speech 402 from the user(s) 150 includes the question "what happens during the last 15 minutes of the movie?". The remote control(s) 110 can generate the audio signal 404 based on the question from the user(s) 150, and send the audio signal 404 to the ASR system(s) 140. The audio signal 404 here can include or encode the question "what happens during the last 15 minutes of the movie?" or a representation of the question. The ASR system(s) 140 can generate the text transcript 406, which in this example includes the text "what happens during the last 15 minutes of the movie?", and send the text transcript 406 to the input interface 134. The media device(s) 106 and/or the context store 126A can also provide context data 408 to the input interface 134, which in this example can identify the movie playing at the media device(s) 106. The historical data store 126B can also optionally provide historical data 410 to the input interface 134.

The input interface 134 can generate the input data 412, which in this example includes the question "what happens during the last 15 minutes of the movie?" and an indication of the movie playing at the media device(s) 106. The LLM 132 can process the input data 412 and determine what movie is playing at the media device(s) 106 and determine that the user(s) 150 wants to know what happens during the last 15 minutes of the movie.

The LLM 132 can decide to query the content data store 126C from the search tools 430 for closed captions associated with the movie, which the LLM 132 can use to describe to the user(s) what happens in the last 15 minutes of the movie. The LLM 132 can generate and send the search request 414 to the data search interface 136, which in this example can request the data search interface 136 to search the content data store 126C for closed captions from the movie. The data search interface 136 can convert the search request 414 into the query 416, which can include a call to the content data store 126C to query the content data store 126C for the closed captions of the movie. The content data store 126C can provide the search result(s) 418 to the data search interface 136, including the closed captions of the movie. The data search interface 136 can provide the search response 420 to the LLM 132, which can include the closed captions of the movie.

The LLM 132 can use the closed captions to generate a summary describing what happens during the last 15 minutes of the movie. The LLM 132 can generate the output(s) 422, which in this example includes the summary describing what happens during the last 15 minutes of the movie, and provide the output(s) 422 to the output interface 138. The output interface 138 can use the output(s) 422 to generate the command(s) 424 and send the command(s) 424 to the media device(s) 106. The media device(s) 106 can receive and execute the command(s) 424, which in this example can trigger the media device(s) 106 to output a message describing what happens in the last 15 minutes of the movie. The message can be a text message displayed on a screen or a voice message (e.g., a TTS message) output via one or more speaker devices.

In another illustrative example, assume that the media device(s) 106 is a television and the speech 402 from the user(s) 150 includes a command stating "I will be away every weekday at 8 AM and will return every weekday at 6 PM, so turn off the TV when I am away every weekday but turn it back on when I return". The remote control(s) 110 can generate the audio signal 404 based on the command from the user(s) 150, and send the audio signal 404 to the ASR system(s) 140. The audio signal 404 here can include or encode the command from the user(s) 150 or a representation of the command. The ASR system(s) 140 can generate the text transcript 406, which in this example includes the text "I will be away every weekday at 8 AM and will return every weekday at 6 PM, so turn off the TV when I am away every weekday but turn it back on when I return", and send the text transcript 406 to the input interface 134. Optionally, the media device(s) 106 and/or the context store 126A can also provide context data 408 to the input interface 134, and/or the historical data store 126B can provide historical data 410 to the input interface 134. The context data 408 can include, for example, a time zone configured at the media device(s) 106 and/or any TV power change settings (e.g., scheduled power on and/or power off times) configured at the media device(s) 106. The historical data 410 can include, for example, information about previous commands from the user(s) 150 to turn on and/or off the television, previous usage of the television during weekdays (and/or any other days), and/or any other relevant information.

The input interface 134 can generate the input data 412 for the LLM 132 based on the text transcript 406, and optionally the context data 408 and/or the historical data 410. The LLM 132 can receive the input data 412 and determine that the user(s) 150 wants to configure the television to turn off every weekday at 8 AM and turn back on at 6 PM. The LLM 132 can generate the output(s) 422, which in this example can include a power off schedule for turning off the television every weekday at 8 AM, and a power on schedule for turning on the television every weekday at 6 PM. The output interface 138 can receive the output(s) 422 from the LLM 132, and generate the command(s) 424 for the television (e.g., the media device(s) 106 in this example). The command(s) 424 in this example can include a command to configure the power on schedule at the television and a command to configure the power off schedule at the television. The output interface 138 can provide the command(s) 424 to the television, which can execute the command(s) 424 to configure the power on schedule and the power off schedule at the television.

In some cases, the output(s) 422 from the LLM 132 can include a message confirming that the requested schedule has been set at the television. The command(s) 424 can also include a command configured to trigger the television to display the confirmation message and/or output the confirmation message as an audible message (e.g., via a speaker device). Thus, when the television executes the command(s) 424, the television can display the confirmation message and/or output the confirmation message as an audible/spoken message. In other cases, rather than including such confirmation message in the output(s) 422, before providing a confirmation message to the user(s) 150, the LLM 132 can wait until the television executes the command(s) 424 to set the schedule and the LLM 132 confirms that the schedule has been set on the television.

For example, after executing the command(s) 424 and configuring the schedule at the television, the television can provide additional context data to the input interface 134 indicating that the schedule has been set at the television. The input interface 134 can generate additional input data for the LLM 132 based on the additional context data, in order to inform the LLM 132 that the schedule has been set at the television. The LLM 132 can use the additional context data to determine that the schedule has been set and generate a confirmation message for the user(s) 150. The confirmation message can include text to be displayed by the television and/or an audible/spoken confirmation message for output by one or more speaker devices associated with the television, which can provide confirmation to the user(s) 150 that the schedule was set at the television. The LLM 132 can provide an additional output to the output interface 138 that includes the confirmation message for the user(s) 150. The output interface 138 can use the additional output to generate another command configured to trigger the television to output the confirmation message (e.g., as displayed text and/or an audible/voice message). The television can execute the additional command from the output interface 138, which can trigger the television to output the confirmation message as described above.

The command(s) 424 can be configured to execute at the media device(s) 106 to perform one task or multiple tasks. For example, if the output interface 138 determines that the output(s) 422 from the LLM 132 provides an instruction to display a message confirming that a movie requested by the user(s) 150 (e.g., via the speech 402) is available, followed by an action to play the movie, change the language settings of the movie per the request from the user(s) 150, and set a Bluetooth speaker (e.g., a speaker connected to the media device(s) 106 via Bluetooth) as the audio output device used by the media device(s) 106 to output the audio portion of the movie, the output interface 138 can convert the output(s) 422 from the LLM 132 into a command configured to execute at the media device(s) 106 to display the message, play the movie, change the language settings of the movie, and set the Bluetooth speaker as the audio output device used by the media device(s) 106 to output the audio portion of the movie.

In FIG. 4, the search tools 430 include a content data store 126C, a channel data store 126D, a user data store 126E, a programming data store 126F, a device information data store 126G, another data store 126N, and the remote source(s) 432. However, the search tools 430 shown in FIG. 4 are non-limiting examples provided for illustration purposes. Thus, in other examples, the search tools 430 can include more or less search tools than shown in FIG. 4, and can include one or more tools that are not shown in FIG. 4.

Moreover, in FIG. 4, the content data store 126C in the search tools 430 can include information about any content (and/or the content itself) available at/to clients (e.g., the media device(s) 106, the display device(s) 108) in the multimedia environment 102, such as movies, TV shows, images, content metadata, closed captions and/or subtitles of specific content items, content identifiers, content tags, etc. The channel data store 126D can include information about any channels installed at the media device(s), any channels installed at the display device(s) 108, and/or any channels available from one or more sources in the multimedia environment 102 (e.g., which can include channels that may not be installed at the media device(s) 106 and/or the display device(s) 108). The user data store 126E can include any information about and/or from the user(s) 150 such as user preferences, a user profile(s), user settings, user inputs, user account information, user location information, user demographics, user-specific device and/or application profiles, etc.

The programming data store 126F can include channel programming information and/or schedules, such as a channel guide with information about channels and scheduled programming at each of the channels. The device information data store 126G can include any information about user devices (e.g., the media device(s) 106, the display device(s) 108, etc.) such as, for example and without limitation, device capabilities, device settings, device manuals (e.g., which can be used by the LLM 132 to determine what settings and/or operations are available at a device, how to configure various settings and/or operations at the device, troubleshooting information for the device, and/or any other related device information), device statistics, device software information, device features and/or functionalities, etc. The other data store 126N can include a data store containing any other information about the user(s) 150, the devices in the multimedia environment 102, device operations, etc. The remote source(s) 432 can include any remote source(s) of information, such as the Internet, a cloud or network, a remote data repository, etc.

While the process 400 in FIG. 4 depicts interactions between the user(s) 150 and the media device(s) 106 via the AI assistant 130 (and the LLM 132 of the AI assistant 130), one of ordinary skill in the art will recognize from the disclosure that the process 400 can be used for interactions between the user(s) 150 and any other device, such as the display device(s) 108, which can be supported by the AI assistant 130 (including the LLM 132) as previously described. Moreover, for simplicity and illustration purposes, the process 400 in FIG. 4 depicts a single interaction between the user(s) and the media device(s) 106 through the AI assistant 130. However, in other examples, the process 400 can be implemented iteratively to support multiple interactions between the user(s) 150 and one or more devices (e.g., via the AI assistant 130), such as the media device(s) 106.

Moreover, while the process 400 is described with respect to a speech input (e.g., speech 402) from the user(s) 150 and an audio signal 404 generated based on the speech input from the user(s) 150, the process 400 can be triggered using other types of inputs from the user(s) 150 in addition to or instead of the speech input. For example, the user(s) 150 can provide text input and/or an input selection via an input device to trigger the process 400. If the user input does not include a speech input, the process 400 may not need to implement the ASR system(s) 140 to generate a text transcript from an audio signal. Instead, the media device(s) 106 can provide the user input to the input interface 134, which can generate a text description of the user input and generate the input data 412 based on the text description (as well as any other data described herein). The process 400 can then proceed as previously described.

If the user(s) 150 provides the speech input (e.g., speech 402) as well as another type of input, in addition to providing the audio signal 404 to the ASR system(s) 140, the media device(s) 106 can provide such input to the input interface 134. The input interface 134 can generate the input data 412 as previously described but also using a text description generated by the input interface 134 from the other input (e.g., text describing the input or convey the information from the input). The process 400 can then proceed as previously described.

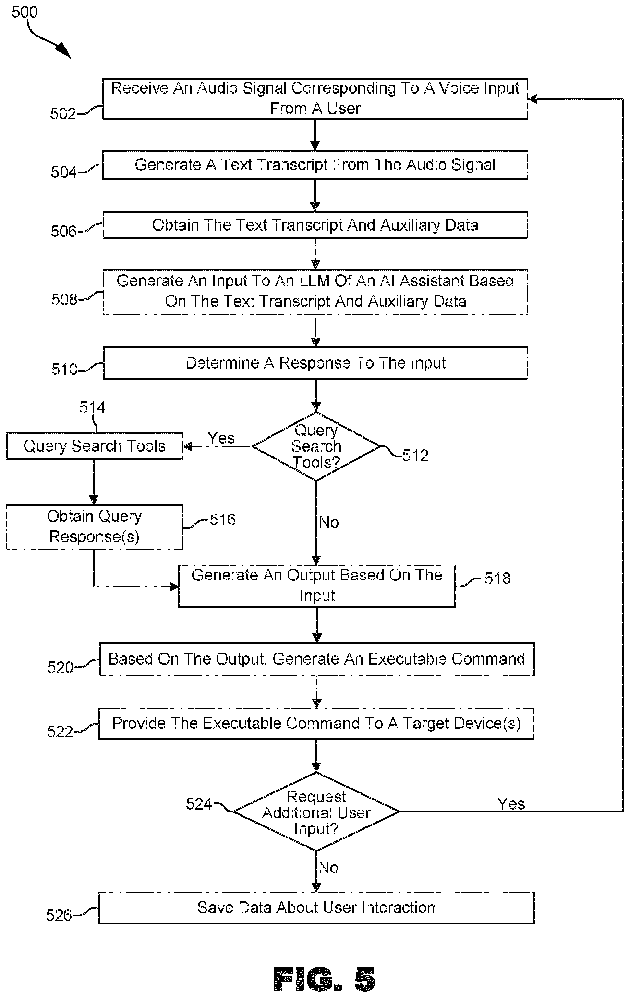

FIG. 5 is a flowchart illustrating an example method 500 for using a conversational AI system to interact with a media device, according to some examples of the present disclosure. The method 500 can be performed by processing logic that can include hardware (e.g., circuitry, dedicated logic, programmable logic, microcode, etc.), software (e.g., instructions executing on a processing device), or a combination thereof. It is to be appreciated that not all steps may be needed to perform the method 500. Further, some of the steps may be performed simultaneously, or in a different order than shown in FIG. 5, as will be understood by a person of ordinary skill in the art. Method 500 shall be described with reference to FIGs. 1 and 4. However, method 500 is not limited to those examples.

The example method 500 allows users to interact with a media device through the AI assistant 130. The media device can include, for example and without limitation, a television, a gaming system or console, a set-top box, an IoT device with input capabilities, a virtual reality and/or augmented reality device, a streaming device, an HMD, a computer, a mobile device (e.g., a smartphone), a smart wearable device (e.g., smart glasses, a smart watch, etc.), and the like. In FIG. 5, the method 500 is described with reference to the media device(s) 106. However, the media device can include the display device(s) 108 or any other media device such.

At step 502, the ASR system(s) 140 can receive an audio signal (e.g., audio signal 404) corresponding to a voice input (e.g., speech 402) from a user (e.g., user(s) 150). The audio signal can include, encode, and/or represent the voice input from the user. The voice input can include, for example, a question, a command, a request, a reply to a request, and/or any other utterance.

At step 504, the ASR system(s) 140 can generate a text transcript (e.g., text transcript 406) from the audio signal. The ASR system(s) 140 can perform automatic speech recognition to recognize any speech from the voice input conveyed, included, and/or encoded via the audio signal. The text transcript can include a text version of the speech recognized by the ASR system(s) 140 from the voice input associated with the audio signal.

At step 506, the input interface 134 can obtain the text transcript from the ASR system(s) 140 and (optionally) auxiliary data from one or more sources, such as the media device(s) 106, the context data store 126A, the historical data store 126B, and/or any other source(s). The auxiliary data can include any data other than the text transcript, such as data used by the LLM 132 of the AI assistant 130 to respond and/or understand the voice input associated with the text transcript and the audio signal. For example, in some cases, the auxiliary data can include the context data 408 and/or the historical data 410.

At step 508, the input interface 134 can generate an input (e.g., input data 412) to the LLM 132 of the AI assistant 130 based on the text transcript and (optionally) the auxiliary data. The input can include, encode, represent, and/or convey the text from the text transcript and (optionally) the information from the auxiliary data in a format, structure, configuration, scheme, protocol, standard, and/or specification that is understood by the LLM 132 and/or defined for inputs to the LLM 132.

At step 510, the LLM 132 of the AI assistant 130 can determine a response to the input from the input interface 134. The response can include an action, decision, message, reply, dialogue, task, content item (e.g., movie, TV show, video, image, live feed, etc.), instruction, data output, and/or any other output associated with the voice input from the user, such as an output determined by the LLM 132 for the voice input from the user, responsive to the voice input from the user, and/or otherwise related to, corresponding to, and/or based on the voice input from the user. For example, the response can include an action, setting, operation, content item, information, output, and/or command requested by the user via the voice input.

To illustrate, the response can include a content item (e.g., a movie, TV show, video, image, etc.) and/or a determination that the user wants information about the content item, a request to play a content item and/or channel at the media device(s) 106, a request to configure or program a setting on the media device(s) 106, a query for information, a request to automate one or more actions at the media device(s) 106, a request to install a channel and/or application at the media device(s) 106, a command for the media device(s) 106, a request to troubleshoot the media device(s) 106 and/or troubleshooting information for the media device(s) 106, a request for instructions to change or configure an action and/or setting at the media device(s) 106, a request for a user manual of the media device(s) 106, a request for status information associated with the media device(s) 106, a request for help, a request for a question-answer (Q&A) conversation relating to the media device(s) 106, a dialogue pertaining to the media device(s) 106, etc.

At step 512, the LLM 132 can determine whether to query the search tools 430 based on the determined response to the input. For example, the LLM 132 can determine whether to query the search tools 430 based on the type of response determined based on the input, the information to be included in the response, the confidence of the LLM 132 in any information determined by the LLM 132 for the response, a confidence of the LLM 132 in the response, whether the LLM 132 decides that the LLM 132 needs more information for the response, the type of voice input associated with the response and/or the type of request (if any) from the user included or conveyed in the voice input, an accuracy expected by the user in the response, an amount of detail included in the response and/or requested in the voice input, and/or any other information or factor.

To illustrate, if the response determined by the LLM 132 includes a response to a question from the user, before generating an output for the user based on the response, the LLM 132 can query the search tools 430 to verify/confirm the accuracy of information associated with the response (e.g., to avoid providing users information hallucinated by the model or otherwise incorrect information), obtain information and/or content for the response, supplement any information generated by the LLM 132 for the response, and/or to check or obtain any information or content associated with the response. For example, if the response includes information about a content item, a channel, an application, a setting, or a schedule, the LLM 132 can query the search tools 430 to obtain such information or, if the LLM 132 has the information, to verify/confirm the accuracy of the information from the LLM 132. On the other hand, if the response includes a requested action that the LLM 132 can perform, trigger, and/or initiate without additional data from the search tools 430 and/or without a need to check or verify the requested action with the search tools 430, the LLM 132 can skip querying the search tools 430.

If the LLM 132 decides to query the search tools 430, the LLM 132 can query the search tools 430 at step 514, and obtain a query response(s) from the search tools 430 at step 516. In some examples, the LLM 132 can use the data search interface 136 to query the search tools 430. For example, the LLM 132 can provide a search request (e.g., search request 414) to the data search interface 136. The search request can include a query to be used to query the search tools 430, and an indication of which specific search tool(s) from the search tools 430 (or all the search tools 430 if the query should be sent to all) should receive the query. The data search interface 136 can generate or obtain the query (e.g., query 416) from or based on the search request, and send the query to the search tools 430 (to one or more search tools from the search tools 430). The data search interface 136 can receive a search result (e.g., search result(s) 418) in response to the query and, based on the search result, generate a search response (e.g., search response 420) for the LLM 132. Once the LLM 132 obtains the search response, the process 500 can proceed to step 518.

If at step 512 the LLM 132 decides not to query the search tools 430, the LLM 132 can proceed to step 518. At step 518, the LLM 132 can generate an output (e.g., output(s) 422) based on the input to the LLM 132. The LLM 132 can send the output to the output interface 138, as further described below. The output can include the response, information for/from the response, one or more content items obtained for the response or as part of the response, an instruction(s) generated based on the determined response, and/or any other information associated with the response. If the LLM 132 queried the search tools 430 at step 514, the output can additionally or alternatively include additional information obtained from the search tools 430, a revised response based on the search response obtained from querying the search tools 430, information for/from the revised response, one or more content items obtained for the revised response or as part of the revised response, an instruction(s) generated based on the revised response, and/or any other information associated with the response or the revised response.

At step 520, the output interface 138 can generate an executable command (e.g., command(s) 424) based on the output from the LLM 132. The executable command can include one or more commands that are executable at a target device(s), such as the media device(s) 106. In some examples, the executable command can be configured for execution at a particular execution environment (e.g., an operating system) of the target device. For example, the executable command can include one or more commands that are executable in an executing environment (e.g., the operating system) of the media device(s) 106.

Moreover, the executable command can be configured to execute at the media device(s) 106 (or any other target device) to perform any actions, operations, steps, processes, methods, and/or instructions associated with the output from the LLM 132. For example, if the output from the LLM 132 includes a text-to-speech message, the executable command can be configured to trigger the media device(s) 106 to output the text-to-speech message via one or more speaker devices associated with the media device(s) 106. As another example, if the output from the LLM 132 includes an instruction to perform a task, such as apply or modify a setting at the media device(s) 106 and/or play a particular content item at the media device(s) 106, the executable command can be configured to perform that task (e.g., apply or modify that setting at the media device(s) 106 and/or play the particular content item).

In some examples, the executable command can be configured to perform multiple tasks. For example, if the output interface 138 determines that the output from the LLM 132 provides an instruction to play a movie, turn on closed captions for the movie, and display a confirmation message for the user, the output interface 138 can convert the output into an executable command configured to execute at the media device(s) 106 to play the movie, turn on closed captions for the movie, and display the confirmation message.

At step 522, the output interface 138 can provide the executable command to a target device(s), which in this example is the media device(s) 106. For example, the output interface 138 can provide the executable command to the media device(s) 106 to trigger the media device(s) 106 to execute the executable command to perform any action, task, operation, step, process, method, or instruction associated with the executable command. The media device(s) 106 can receive and execute the executable command. In some examples, the executable command can include instructions for the media device(s) 106 to execute the executable command or can be configured to automatically execute at the media device(s) 106 when the media device(s) 106 receives or stores the executable command. In some cases, the executable command can be configured to execute (and/or perform an action, operation, task, etc.) at the media device(s) 106 (or can include instructions for the media device(s) to execute the executable command at the media device(s) 106) at a specific time, based on a schedule, at specific periods or intervals of time, or in response to a trigger (e.g., an event, an action, an operation, a condition, etc.). For example, the executable command can be configured to execute at the media device(s) 106 every weekday at a certain time and/or perform a task every weekday at the certain time.

At step 524, if the executable command includes a request for additional input from the user, the executable command can trigger the media device(s) 106 to request the additional input from the user and the method 500 can return to step 502 to process an audio signal generated based on the additional input from the user. For example, if the LLM 132 determines that the LLM 132 needs more input from the user or otherwise determines to request additional input from the user, the LLM 132 can configure the output from the LLM 132 to include a message requesting the additional input from the user. The executable command created by the output interface 138 based on the output from the LLM 132 can thus be configured to trigger the media device(s) 106 to output the message requesting additional input from the user.

On the other hand, if the executable command does not include a request for additional input from the user, the method 500 can end after step 524 or can optionally proceed to step 526. At step 526, the AI assistant 130 (or the media device(s) 106) can save data about the user interaction from any of the steps 502 through 524. The AI assistant 130 can save such data at the historical data store 126B so that such data is available for future interactions with the AI assistant 130. For example, the AI assistant 130 can save in the historical data store 126B data including or describing the user input used to generate the audio signal received at step 502, the input for the LLM 132 of the AI assistant generated at step 508, the response to the input determined at step 510, the query response(s) (if any) obtained at step 516, the output generated at step 518, and/or the executable command generated at step 520.

While the method 500 is described with respect to an audio signal generated based on a voice/speech input from the user, the method 500 can be triggered using other types of inputs from the user in addition to or instead of the voice/speech input. For example, the user can provide text input and/or an input selection via an input device to trigger the method 500. If the user input does not include voice/speech input, the method 500 can generate a text description of the user input at step 504 and proceed at step 506 with the text description and the auxiliary data.

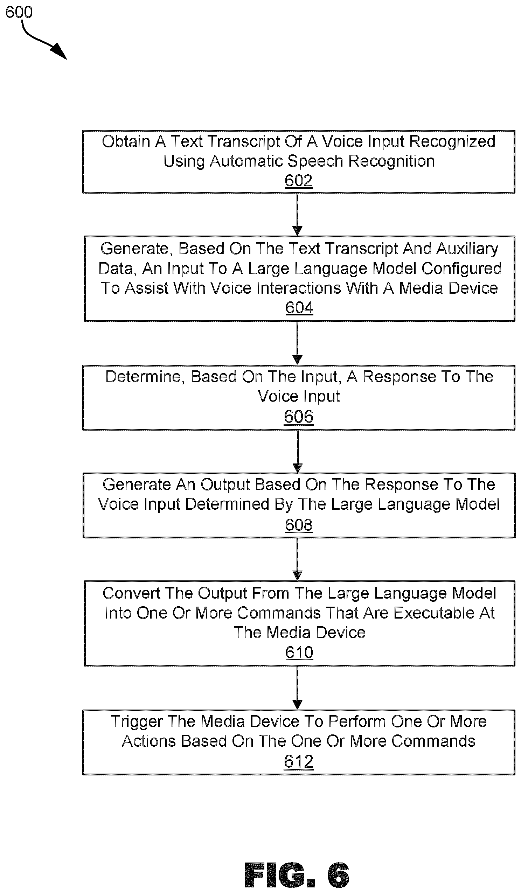

FIG. 6 is a flowchart illustrating another example method 600 for using a conversational AI system to interact with a media device, according to some examples of the present disclosure. The method 600 can be performed by processing logic that can include hardware (e.g., circuitry, dedicated logic, programmable logic, microcode, etc.), software (e.g., instructions executing on a processing device), or a combination thereof. It is to be appreciated that not all steps may be needed to perform the method 600. Further, some of the steps may be performed simultaneously, or in a different order than shown in FIG. 6, as will be understood by a person of ordinary skill in the art. Method 600 shall be described with reference to FIGs. 1 and 4. However, method 600 is not limited to those examples.

At step 602, the input interface 134 can obtain a text transcript (e.g., text transcript 406) of a voice input (e.g., speech 402) recognized using automatic speech recognition (ASR). For example, the input interface 134 can obtain a text transcript generated by the ASR system(s) 140 based on an audio signal generated from the voice input.

At step 604, the input interface 134 can generate, based on the text transcript and auxiliary data, an input (e.g., input data 412) to the LLM 132 (or any other neural network) configured to assist with voice interactions with the media device(s) 106. In some examples, the auxiliary data can include context data (e.g., context data 408) and/or historical data (e.g., historical data 410). For example, the auxiliary data can include information about a context of the media system(s) 104, a context of the media device(s) 106 (e.g., what content, if any, is being played or presented by the media device(s) 106, what content is displayed on a screen associated with the media device(s) 106, what channels and/or applications are installed on the media device(s) 106, a device model, device capabilities, device settings, processes/services running at the media device(s) 106, a status of the media device(s) 106, etc.), a context of a user (e.g., user(s) 150) associated with the voice input (e.g., a user location, a user demographics data, a status of the user, etc.), and/or historical data such as data about previous voice interactions with the media device that were assisted by the LLM 132. In some examples, the input interface 134 can then provide the input to the LLM 132 (or any other neural network).

At step 606, the LLM 132 can determine, based on the input, a response to the voice input. For example, the LLM 132 can make any decisions based on the input, determine how to respond to the voice input, determine what information to obtain to respond to the voice input, determine what action(s) to perform based on the input, etc.

In some cases, the LLM 132 can determine whether to query the search tools 430 for information used to verify the response to the voice input. If the LLM 132 determines to query the search tools 430, the LLM 132 can instruct the data search interface 136 to query the search tools 430 for the information used to verify the response, and based on a query response from the search tools 430 (e.g., provided by the data search interface 136 to the LLM 132), the LLM 132 can determine whether to revise the response to the voice input.

For example, in some cases, the one or more tasks requested by the voice input can include outputting requested information about a content item (e.g., a movie, TV show, video, live broadcast, application, etc.), a media channel, scheduled television content from one or more television or streaming channels, a device setting, and/or a device capability. In this example, the LLM 132 can determine whether to revise the response to the voice input by querying, via the data search interface 136, the search tools 430 for data used to verify the response, receive the data from the search tools 430 (e.g., via the data search interface 136), determine a difference between data in the response determined by the LLM 132 and the data from the search tools 430, and revise the response to the voice input based on the data from the search tools 430.

As another example, in some cases, the voice input can request the media device(s) 106 to perform one or more tasks which include performing an operation at the media device(s) 106 such as adjusting one or more settings at the media device(s) 106. The one or more settings can include, for example, a volume setting, a display and/or video setting, a media content playback setting, an audio output setting, a closed caption setting, a language setting, a video output setting, a power setting, and/or any other setting. In this example, the LLM 132 can obtain information from the search tools 430 about the one or more settings and determine the response to the voice input based on the information about the one or more settings. In some examples, the information about the one or more settings can include instructions for adjusting the one or more settings and/or a confirmation that the one or more settings can be adjusted as requested.

In another example, the one or more tasks requested by the voice input can include outputting (e.g., via a display and/or a speaker device) an indication of an availability of one or more requested items such as, for example, a content item (e.g., a movie, a TV show, a live broadcast, a video, an application, etc.), a media channel, scheduled television content from one or more television or streaming channels, a device setting, and/or a device capability. In this example, the LLM 132 can query the search tools 430 (e.g., via the data search interface 136) for data about the availability of the one or more requested items and receive the data about the availability of the one or more requested items. If the response determined by the LLM 132 indicates that the one or more requested items are available but the data from the search tools 430 about the availability of the one or more requested items indicates that the one or more requested items are unavailable, the LLM 132 can revise the response to the voice input to indicate that the one or more requested items are unavailable.

At step 608, the LLM 132 can generate an output (e.g., output(s) 422) based on the response to the voice input determined by the LLM 132. The output can include any decisions, data (e.g., information, content items, etc.), settings, actions, and/or other items included in or determined from the response to the voice input. In some examples, the LLM 132 can also provide the output to the output interface 138.

At step 610, the output interface 138 can convert the output from the LLM 132 into one or more commands that are executable at the media device(s) 106. The one or more commands can be configured to trigger the media device(s) 106 to perform one or more actions associated with the response to the voice input determined by the LLM 132.

At step 612, the output interface 138 can trigger the media device(s) 106 to perform the one or more actions based on the one or more commands. For example, the output interface 138 can provide the one or more commands to the media device(s) 106, which can execute the one or more commands to perform the one or more actions.

In some cases, triggering the media device(s) 106 to perform the one or more actions can include triggering the media device to perform an operation, such as adjusting one or more settings. The one or more settings can include, for example, a volume setting, a display and/or video setting, a media content playback setting, an audio output setting, a closed caption setting, a language setting, a video output setting, a power setting, and/or any other setting.

In some examples, the one or more tasks requested by the voice input can include presenting a content item via a display associated with the media device(s) 106. In this example, the LLM 132 can determine whether the content item is available to the media device(s) 106 from a data source (e.g., content server(s) 120 and/or content data store 126). If the LLM 132 determines that the content item is available, the LLM 132 can include in the output an instruction to obtain the content item from the data source and present the content item via the display associated with the media device(s) 106. In this example, the one or more commands can be configured to trigger the media device(s) 106 to obtain the content item from the data source and present the content item via the display.

While various steps of method 600 are described here as being implemented by the LLM 132, in other examples, such steps can be performed by any other type of neural network model. The LLM 132 is one example implementation of a deep neural network provided as an illustrative example for explanation purposes. Moreover, in some cases, the LLM 132, the input interface 134, the data search interface 136 and/or the output interface 138 can be implemented by the media device(s) 106. For example, the LLM 132, the input interface 134, the data search interface 136 and/or the output interface 138 can be implemented by the AI assistant 130, and the AI assistant 130 can be implemented and hosted by the media device(s) 106. In other cases, the LLM 132, the input interface 134, the data search interface 136 and/or the output interface 138 can be implemented by the system servers 128. For example, the system servers 128 can implement and host the AI assistant 130, including the LLM 132, the input interface 134, the data search interface 136 and the output interface 138. In yet other cases, the LLM 132, the input interface 134, the data search interface 136 and the output interface 138 can be implemented by both, or distributed across both, the media device(s) 106 and the system servers 128.

Similarly, the ASR system(s) 140 used to perform ASR to recognize the voice input and generate the text transcript can be implemented by the media device(s) 106, the system servers 128, or both.

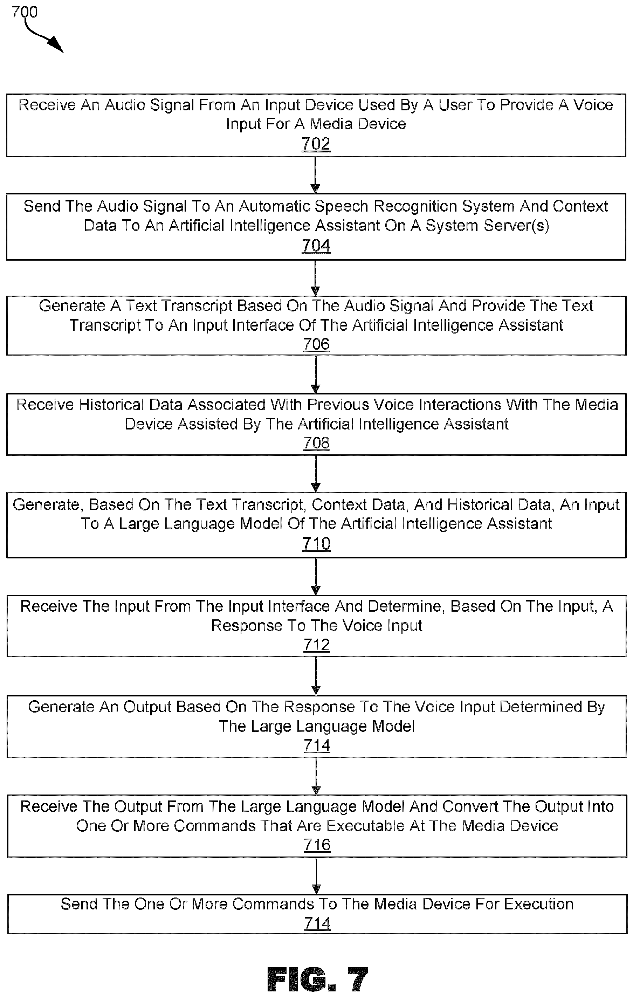

FIG. 7 is a flowchart illustrating an example method 700 for interacting with the media device(s) 106 using a conversational AI system implemented by the system servers 128, according to some examples of the present disclosure. The method 700 can be performed by processing logic that can include hardware (e.g., circuitry, dedicated logic, programmable logic, microcode, etc.), software (e.g., instructions executing on a processing device), or a combination thereof. It is to be appreciated that not all steps may be needed to perform the method 700. Further, some of the steps may be performed simultaneously, or in a different order than shown in FIG. 7, as will be understood by a person of ordinary skill in the art. Method 700 shall be described with reference to FIGs. 1 and 4. However, method 700 is not limited to those examples.

At step 702, the media device(s) 106 can receive an audio signal (e.g., audio signal 404) from an input device used by the user(s) 150 to provide a voice input for the media device(s) 106, such as the remote control(s) 110. The audio signal can include, encode, represent, and/or provide the voice input from the user(s) 150.

At step 704, the media device(s) 106 can send the audio signal to the ASR system(s) 140 on the system servers 128 and context data (e.g., context data 408 or a portion thereof) to the AI assistant 130 on the system servers 128. The context data can include a context of the media device(s) 106, the media system(s) 104, and/or the user(s) 150. The context data can be received by the input interface 134 of the AI assistant 130 on the system servers 128.

At step 706, the ASR system(s) 140 can generate a text transcript (e.g., text transcript 406) based on the audio signal and provide the text transcript to the input interface 134 of the AI assistant 130. For example, the ASR system(s) 140 can use ASR to recognize the speech in the voice input associated with the audio signal and generate a text transcript containing the recognized speech.

At step 708, the input interface 134 can optionally receive historical data (e.g., historical data 410) associated with previous voice interactions with the media device(s) 106 assisted by AI assistant 130.

At step 710, the input interface 134 can generate, based on the text transcript, the context data, and optionally the historical data, an input (e.g., input data 412) to the LLM 132 of the AI assistant 130. The LLM 132 can be configured to assist with voice interactions with the media device(s) 106 and other devices. In some examples, the input interface 134 can then provide the input to the LLM 132 (or any other neural network).

At step 712, the LLM 132 can receive the input from the input interface 134 and determine, based on the input, a response to the voice input. For example, the LLM 132 can make any decisions based on the input, determine how to respond to the voice input, determine what information to obtain to respond to the voice input, determine what action(s) to perform based on the input, etc.

In some cases, the LLM 132 can determine whether to query the search tools 430 for information used to verify the response to the voice input. If the LLM 132 determines to query the search tools 430, the LLM 132 can instruct the data search interface 136 to query the search tools 430 for the information used to verify the response, and based on a query response from the search tools 430 (e.g., provided by the data search interface 136 to the LLM 132), determine whether to revise the response to the voice input.

At step 714, the LLM 132 can generate an output (e.g., output(s) 422) based on the response to the voice input determined by the LLM 132. The output can include any decisions, data (e.g., information, content items, etc.), settings, actions, and/or other items included in or determined from the response to the voice input.

At step 716, the output interface 138 can receive the output from the LLM 132 and convert the output into one or more commands that are executable at the media device(s) 106. The one or more commands can be configured to trigger the media device(s) 106 to perform one or more actions associated with the response to the voice input.

At step 718, the output interface 138 can send the one or more commands to the media device(s) 106 for execution at the media device(s) 106. The one or more commands can trigger the media device(s) 106 to perform the one or more actions.

In some cases, the one or more commands can trigger the media device(s) 106 to perform an operation, such as adjusting one or more settings. The one or more settings can include, for example, a volume setting, a display and/or video setting, a media content playback setting, an audio output setting, a closed caption setting, a language setting, a video output setting, a power setting, and/or any other setting.

### Example Neural Network Architectures And Models

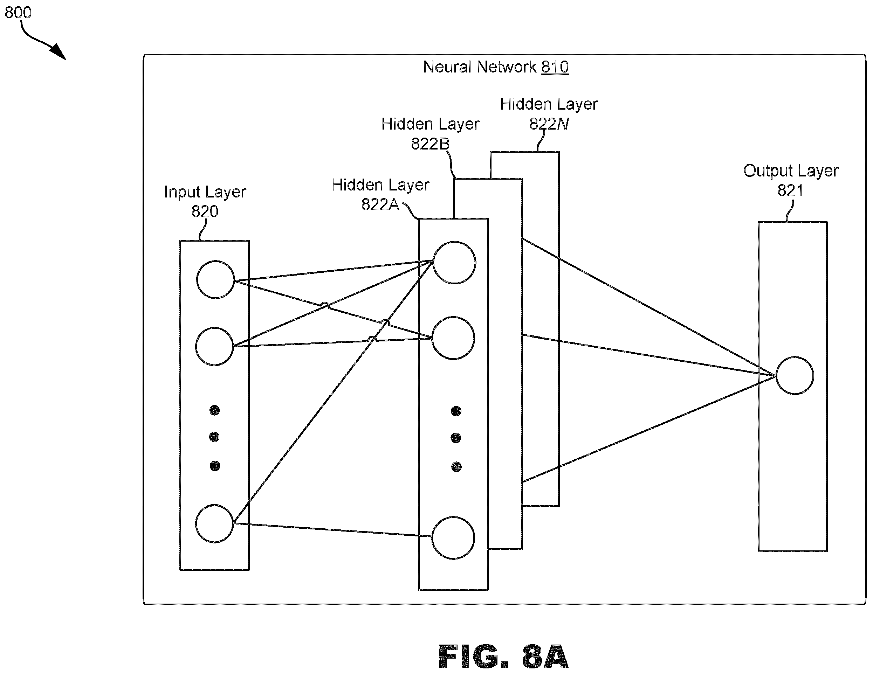

FIG. 8A is a diagram illustrating an example architecture 800 of an example neural network 810. The example architecture 800 can be used to implement any neural network described herein and/or any components described herein that can include or implement a neural network. For example, the architecture 800 can be used to implement the AI assistant 130, the LLM 132, the ASR system(s) 140, the acoustic model 304, the language model 306, the recognition engine 314, the input interface 134, the data search interface 136, and/or the output interface 138.

The architecture 800 of the neural network 810 can include an input layer 820 that can be configured to receive and process data to generate one or more outputs. The architecture 800 of the neural network 810 can also include hidden layers 822a, 822b, through 822n. The hidden layers 822a, 822b, through 822n include "n" number of hidden layers, where "n" is an integer greater than or equal to one. The number of hidden layers can be made to include as many layers as needed for the given application. The architecture 800 of the neural network 810 can further include an output layer 821 that provides an output resulting from the processing performed by the hidden layers 822a, 822b, through 822n.

The neural network 810 is a multi-layer neural network of interconnected nodes. Each node can represent a piece of information. Information associated with the nodes is shared among the different layers and each layer retains information as information is processed. In some cases, the neural network 810 can include a feed-forward network, in which case there are no feedback connections where outputs of the network are fed back into itself. In some cases, the neural network 810 can include a recurrent neural network, which can have loops that allow information to be carried across nodes while reading in input.

Information can be exchanged between nodes through node-to-node interconnections between the various layers. Nodes of the input layer 820 can activate a set of nodes in the first hidden layer 822a. For example, as shown, each of the input nodes of the input layer 820 is connected to each of the nodes of the first hidden layer 822a. The nodes of the first hidden layer 822a can transform the information of each input node by applying activation functions to the input node information. The information derived from the transformation can then be passed to and can activate the nodes of the next hidden layer 822b, which can perform their own designated functions. Example functions include convolutional, up-sampling, data transformation, and/or any other suitable functions. The output of the hidden layer 822b can then activate nodes of the next hidden layer, and so on. The output of the last hidden layer 822n can activate one or more nodes of the output layer 821, at which an output is provided. In some cases, while nodes in the neural network 810 are shown as having multiple output lines, a node can have a single output and all lines shown as being output from a node represent the same output value.

In some cases, each node or interconnection between nodes can have a weight that is a set of parameters derived from the training of the neural network 810. Once the neural network 810 is trained, it can be referred to as a trained neural network, which can be used to generate one or more outputs. For example, an interconnection between nodes can represent a piece of information learned about the interconnected nodes. The interconnection can have a tunable numeric weight that can be tuned (e.g., based on a training dataset), allowing the neural network 810 to be adaptive to inputs and able to learn as more and more data is processed.

The neural network 810 is pre-trained to process the features from the data in the input layer 820 using the different hidden layers 822a, 822b, through 822n in order to provide the output through the output layer 821.

In some cases, the neural network 810 can adjust the weights of the nodes using a training process called backpropagation. A backpropagation process can include a forward pass, a loss function, a backward pass, and a weight update. The forward pass, loss function, backward pass, and parameter/weight update is performed for one training iteration. The process can be repeated for a certain number of iterations for each set of training data until the neural network 810 is trained well enough so that the weights of the layers are accurately tuned.

To perform training, a loss function can be used to analyze an error in the output. Any suitable loss function definition can be used, such as a Cross-Entropy loss. Another example of a loss function includes the mean squared error (MSE), defined as E_total = Σ(1/2 (target-output)^2). The loss can be set to be equal to the value of E_total.

The loss (or error) will be high for the initial training data since the actual values will be much different than the predicted output. The goal of training is to minimize the amount of loss so that the predicted output is the same as the training output. The neural network 810 can perform a backward pass by determining which inputs (weights) most contributed to the loss of the network and can adjust the weights so that the loss decreases and is eventually minimized.

The neural network 810 can include any suitable deep network. One example neural network includes a transformer network, which can be used to implement a large language model such as LLM 132. Another example neural network includes a Convolutional Neural Network (CNN), which includes an input layer and an output layer, with multiple hidden layers between the input and out layers. The hidden layers of a CNN include a series of convolutional, nonlinear, pooling (for downsampling), and fully connected layers. The neural network 810 can include any other deep network other than a transformer or CNN, such as a encoder-decoder network, an encoder-only network, a decoder-only network, a mixture of experts (MoE) network, a generative model network, an autoencoder, Deep Belief Nets (DBNs), Recurrent Neural Networks (RNNs), among others.

As understood by those of skill in the art, machine-learning based techniques can vary depending on the desired implementation. For example, machine-learning schemes can utilize one or more of the following, alone or in combination: hidden Markov models; RNNs; CNNs; deep learning; Bayesian symbolic methods; Generative Adversarial Networks (GANs); support vector machines; image registration methods; and applicable rule-based systems. Where regression algorithms are used, they may include but are not limited to a Stochastic Gradient Descent Regressor, a Passive Aggressive Regressor, etc.

Machine learning classification models can also be based on clustering algorithms (e.g., a Mini-batch K-means clustering algorithm), a recommendation algorithm (e.g., a Minwise Hashing algorithm, or Euclidean Locality-Sensitive Hashing (LSH) algorithm), and/or an anomaly detection algorithm, such as a local outlier factor. Additionally, machine-learning models can employ a dimensionality reduction approach, such as, one or more of: a Mini-batch Dictionary Learning algorithm, an incremental Principal Component Analysis (PCA) algorithm, a Latent Dirichlet Allocation algorithm, and/or a Mini-batch K-means algorithm, etc.

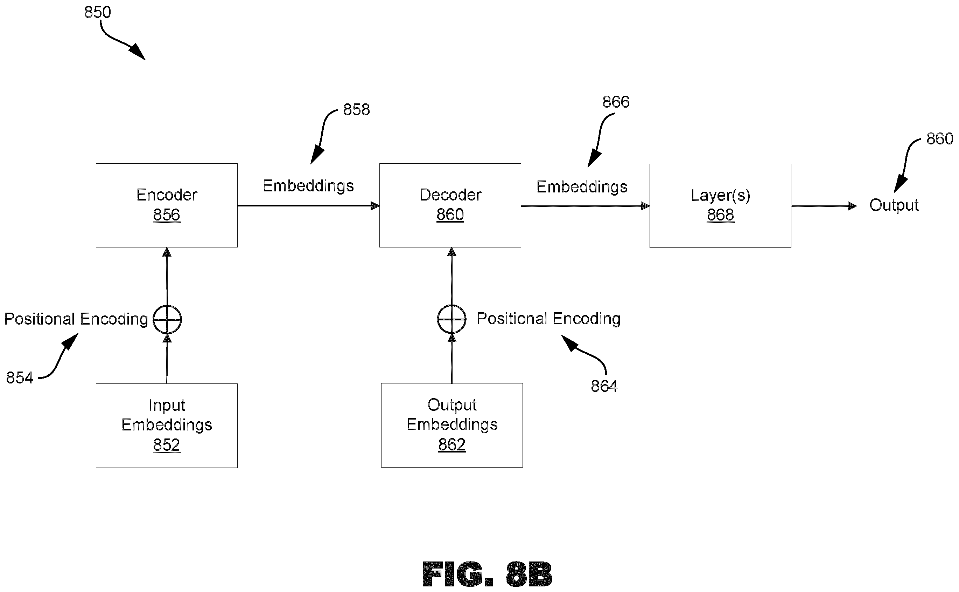

FIG. 8B is a diagram illustrating an example architecture of an example transformer model 850, according to some examples of the present disclosure. The transformer model 850 can be used to implement an LLM, such LLM 132. As shown, the transformer model 850 can include input embeddings 852 used as inputs to the transformer model 850. The input embeddings 852 can include input values representing words and/or sentences, such as numbers or vectors representing words and/or sentences.

In some cases, the input embeddings 852 can function like a dictionary that helps the transformer model 850 understand the meaning of words by placing them in an embedding space where similar words are located near each other. In some examples, the input interface 134 can be trained and/or configured to create the input embeddings 852 so that similar vectors represent words with similar meanings. For example, the input interface 134 can be trained and/or configured to create the input embeddings 852 based on the text transcript 406, the context data 408, and (optionally) the historical data 410. In some examples, the transformer model 850 can additionally or alternatively learn to create and/or process the input embeddings 852 during training.

The transformer model 850 can use positional encoding 854 to encode the position of each word in an input sequence from the input embeddings 852 as values such as a set of numbers, a vector, etc. The values generated by the positional encoding 854 can be fed into the transformer model 850 along with the input embeddings 852. By incorporating the positional encoding 854 into the transformer model 850, the transformer model 850 can more effectively understand the order of words in a sentence and generate grammatically correct and semantically meaningful output.

The transformer model 850 can include an encoder(s) 856 used to process the positionally encoded input embeddings 852 and generate embeddings 858. The encoder(s) 856 can be part of the transformer model 850 that processes input text and generates hidden states that capture the meaning and context of the text. For example, the encoder(s) 856 can include a feed-forward neural network that is part of the transformer model 850. In some examples, the encoder(s) 856 can implement multiple encoder layers. In some cases, the encoder(s) 856 can first tokenize the input text into a sequence of tokens, such as individual words or subwords. The encoder(s) 856 can then apply one or more self-attention layers, which can generate hidden states that represent the input text at different levels of abstraction. In this way, the encoder(s) 856 can generate the embeddings 858 (e.g., a vector, a set of values, etc.) representing the semantics and position of words in one or more sentences.

The transformer model 850 can include output embeddings 862, which can include values representing words and/or sentences, such as numbers or vectors representing words and/or sentences. The output embeddings 862 can be similar to the input embeddings 852 and can also be processed by positional encoding 864 to encode the position of each word in a sequence from the output embeddings 862 as values such as a set of numbers, a vector, etc., which helps the transformer model 850 understand the order of words in a sentence. The output embeddings 862 can be used during a training phase of the transformer model 850 and can be used during an inference phase. During training, a loss function can be computed based on the output embeddings 862 and used to update the model parameters to improve the accuracy of the transformer model 850. During an inference phase, the output embeddings 862 can be used to generate the output text by mapping the predicted probabilities determined by the transformer model 850 for each token to the corresponding token in the vocabulary.

The positionally encoded input embeddings 852 (e.g., the embeddings 858) and the positionally encoded output embeddings 862 can be fed to a decoder(s) 860 used to generate the output sequence based on the encoded input sequence. During training, the decoder(s) 860 can learn how to guess the next word of a sequence by looking at the words before it. In some examples, the decoder(s) 860 can generate natural language text based on the input sequence and any learned context.

The decoder(s) 860 can generate embeddings 866 and feed the embeddings 866 to one or more network layers 868. In some examples, the one or more network layers 868 can include a linear layer and a softmax function. The linear layer can map the embeddings 866 generated by the decoder(s) 860 to a higher-dimensional space, which can transform the embeddings 866 into the original input space. The softmax function can then be applied to generate a probability distribution for each output token in the vocabulary, which can result in an output 870. In some examples, the output 870 can include output tokens with probabilities.

### Example Computer System

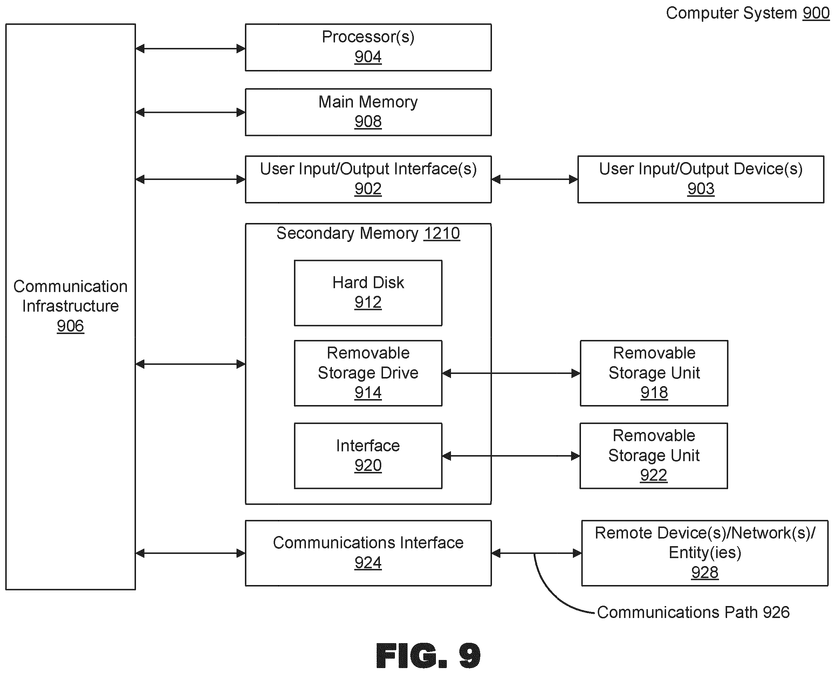

Various aspects and examples may be implemented, for example, using one or more well-known computer systems, such as computer system 900 shown in FIG. 9. For example, the media device(s) 106, the display device(s) 108, the content server(s) 120, the system servers 128, and/or any other device may be implemented using combinations or sub-combinations of computer system 900. Also or alternatively, computer system 900 may be used, for example, to implement any of the aspects and examples discussed herein, as well as combinations and sub-combinations thereof.

Computer system 900 may include one or more processors (e.g., central processing units or CPUs), such as processor 904. Processor 904 may be connected to a communication infrastructure 906 (or communication bus).

Computer system 900 may also include user input/output device(s) 903, such as monitors, keyboards, pointing devices, etc., which may communicate with communication infrastructure 906 through user input/output interface(s) 902.

In some examples, the one or more processors 904 may include a graphics processing unit (GPU). In some examples, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc. In other examples, the one or more processors 904 may additionally or alternatively include or be part of a digital signal processor (DSP), an image signal processor (ISP), an application-specific integrated circuit (ASIC), a field-programmable gate array (FPGA), an integrated circuit, a microcontroller, and/or any other processing device.

Computer system 900 may also include a main or primary memory 908, such as random access memory (RAM). Main memory 908 may include one or more levels of cache. Main memory 908 may have stored therein control logic (e.g., computer software) and/or data.

Computer system 900 may also include one or more secondary storage devices or memory 910. Secondary memory 910 may include, for example, a hard disk drive 912 and/or a removable storage device or drive 914. Removable storage drive 914 may be a floppy disk drive, a magnetic tape drive, a compact disk drive, an optical storage device, tape backup device, and/or any other storage device/drive.

Removable storage drive 914 may interact with a removable storage unit 918. Removable storage unit 918 may include a computer usable or readable storage device having stored thereon computer software (control logic) and/or data. Removable storage unit 918 may be a floppy disk, magnetic tape, compact disk, DVD, optical storage disk, and/ any other computer data storage device. Removable storage drive 914 may read from and/or write to removable storage unit 918.

Secondary memory 910 may include other means, devices, components, instrumentalities or other approaches for allowing computer programs and/or other instructions and/or data to be accessed by computer system 900. Such means, devices, components, instrumentalities or other approaches may include, for example, a removable storage unit 922 and an interface 920. Examples of the removable storage unit 922 and the interface 920 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 900 may include a communication or network interface 924. Communication interface 924 may enable computer system 900 to communicate and interact with any combination of external devices, external networks, external entities, etc. (individually and collectively referenced by reference number 928). For example, communication interface 924 may allow computer system xx00 to communicate with external or remote devices 928 over communications path 926, which may be wired and/or wireless (or a combination thereof), and which may include any combination of LANs, WANs, the Internet, etc. Control logic and/or data may be transmitted to and from computer system 900 via communication path 926.

Computer system 900 may also be any of a personal digital assistant (PDA), desktop workstation, laptop or notebook computer, netbook, tablet, mobile phone (e.g., smartphone), smart watch or other wearable, appliance, part of the Internet-of-Things, and/or embedded system, to name a few non-limiting examples, or any combination thereof.

Computer system 900 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 900 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some examples, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 900, main memory 908, secondary memory 910, and removable storage units 918 and 922, as well as tangible articles of manufacture embodying any combination of the foregoing. Such control logic, when executed by one or more data processing devices (such as computer system 900 or processor(s) 904), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 7. In particular, embodiments can operate with software, hardware, and/or operating system implementations other than those described herein.

### Conclusion

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still cooperate or interact with each other.

The breadth and scope of this disclosure should not be limited by any of the above-described exemplary embodiments, but should be defined only in accordance with the following claims and their equivalents.

Claim language or other language in the disclosure reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or B and C, or A and B and C. The language "at least one of" a set and/or "one or more" of a set does not limit the set to the items listed in the set. For example, claim language reciting "at least one of A and B" or "at least one of A or B" can mean A, B, or A and B, and can additionally include items not listed in the set of A and B.

Illustrative examples of the disclosure include:
Aspect 1. A system comprising memory; and one or more processors are coupled to the memory and configured to perform operations comprising: obtaining a text transcript of a voice input recognized using automatic speech recognition (ASR), the voice input requesting a media device to perform one or more tasks; based on the text transcript and auxiliary data, generating an input to a neural network configured to assist with voice interactions with the media device, the auxiliary data comprising at least one of a context of the media device, a context of a user associated with the voice input, and historical data associated with previous voice interactions with the media device assisted by the neural network; based on the input, determining, by the neural network, a response to the voice input; generating, by the neural network, an output based on the response to the voice input determined by the neural network; converting the output from the neural network into one or more commands that are executable at the media device, wherein the one or more commands are configured to trigger the media device to perform one or more actions associated with the response to the voice input determined by the neural network; and based on the one or more commands, triggering the media device to perform the one or more actions.
Aspect 2. The system of Aspect 1, wherein the one or more processors are configured to perform operations further comprising: determining, by the neural network, to query one or more data sources for information used to verify the response to the voice input; querying the one or more data sources for the information used to verify the response; and based on a query response from the one or more data sources, determining, by the neural network, whether to revise the response to the voice input determined by the neural network.
Aspect 3. The system of any of Aspects 1 to 2, wherein the one or more tasks requested by the voice input comprises outputting requested information about at least one of a content item, a media channel, scheduled television content from one or more television or streaming channels, a device setting, and a device capability, and wherein determining whether to revise the response to the voice input comprises: querying one or more data sources for data used to verify the response; receiving the data from the one or more data sources; determining a difference between data in the response determined by the neural network and the data from the one or more data sources; and revising, by the neural network, the response to the voice input based on the data from the one or more data sources, wherein the output is based on the revised response.
Aspect 4. The system of any of Aspects 1 to 3, wherein the one or more tasks requested by the voice input comprises presenting a content item via a display associated with the media device, and wherein the one or more processors are configured to perform operations further comprising: determining, by the neural network, that the content item is available to the media device from a data source, wherein the output comprises an instruction to obtain the content item from the data source and present the content item via the display, the one or more commands being configured to trigger the media device to obtain the content item from the data source and present the content item via the display; and wherein triggering the media device to perform the one or more actions comprises triggering the media device to obtain the content item from the data source and present the content item via the display.
Aspect 5. The system of any of Aspects 1 to 4, wherein the one or more tasks requested by the voice input comprises performing an operation at the media device, wherein the operation comprises adjusting one or more settings at the media device, wherein the one or more settings comprises at least one of a volume setting, a display or video setting, a media content playback setting, an audio output setting, a closed caption setting, a language setting, a video output setting, and a power setting, and wherein triggering the media device to perform the one or more actions comprises triggering the media device to perform the operation.
Aspect 6. The system of Aspect 5, wherein the one or more processors are configured to perform operations further comprising: obtaining information from one or more data sources about the one or more settings, the information about the one or more settings comprising at least one of instructions for adjusting the one or more settings and confirmation that the one or more settings can be adjusted as requested; determining, by the neural network, the response to the voice input further based on the information about the one or more settings.
Aspect 7. The system of any of Aspects 1 to 6, wherein the one or more tasks requested by the voice input comprises outputting an indication of an availability of one or more requested items comprising at least one of a content item, a media channel, scheduled television content from one or more television or streaming channels, a device setting, and a device capability, wherein the response determined by the neural network indicates that the one or more requested items are available, and wherein the one or more processors are configured to perform operations further comprising: querying one or more data sources for data about the availability of the one or more requested items; receiving the data about the availability of the one or more requested items, wherein the data about the availability of the one or more requested items indicates that the one or more requested items are unavailable; and based on the data about the availability of the one or more requested items, revising, by the neural network, the response to the voice input to indicate that the one or more requested items are unavailable, wherein the output is based on the revised response.
Aspect 8. The system of any of Aspects 1 to 7, wherein the neural network comprises a large language model, and wherein the media device comprises at least one of a television, a gaming console, a set-top box, a streaming device, a computer, and a head-mounted display (HMD).
Aspect 9. The system of any of Aspects 1 to 8, further comprising at least one of the media device and a remote control comprising one or more microphones used to record the voice input.
Aspect 10. The system of any of Aspects 1 to 9, wherein the neural network is implemented via at least one of the media device and a remote server system.
Aspect 11. A computer-implemented method comprising: obtaining a text transcript of a voice input recognized using automatic speech recognition (ASR), the voice input requesting a media device to perform one or more tasks; based on the text transcript and auxiliary data, generating an input to a neural network configured to assist with voice interactions with the media device, the auxiliary data comprising at least one of a context of the media device, a context of a user associated with the voice input, and historical data associated with previous voice interactions with the media device assisted by the neural network; based on the input, determining, by the neural network, a response to the voice input; generating, by the neural network, an output based on the response to the voice input determined by the neural network; converting the output from the neural network into one or more commands that are executable at the media device, wherein the one or more commands are configured to trigger the media device to perform one or more actions associated with the response to the voice input determined by the neural network; and based on the one or more commands, triggering the media device to perform the one or more actions.
Aspect 12. The computer-implemented method of Aspect 11, further comprising: determining, by the neural network, to query one or more data sources for information used to verify the response to the voice input; querying the one or more data sources for the information used to verify the response; and based on a query response from the one or more data sources, determining, by the neural network, whether to revise the response to the voice input determined by the neural network.
Aspect 13. The computer-implemented method of any of Aspects 11 to 12, wherein the one or more tasks requested by the voice input comprises outputting requested information about at least one of a content item, a media channel, scheduled television content from one or more television or streaming channels, a device setting, and a device capability, and wherein determining whether to revise the response to the voice input comprises: querying one or more data sources for data used to verify the response; receiving the data from the one or more data sources; determining a difference between data in the response determined by the neural network and the data from the one or more data sources; and revising, by the neural network, the response to the voice input based on the data from the one or more data sources, wherein the output is based on the revised response.
Aspect 14. The computer-implemented method of any of Aspects 11 to 13, wherein the one or more tasks requested by the voice input comprises presenting a content item via a display associated with the media device, the computer-implemented method further comprising: determining, by the neural network, that the content item is available to the media device from a data source, wherein the output comprises an instruction to obtain the content item from the data source and present the content item via the display, the one or more commands being configured to trigger the media device to obtain the content item from the data source and present the content item via the display; and wherein triggering the media device to perform the one or more actions comprises triggering the media device to obtain the content item from the data source and present the content item via the display.
Aspect 15. The computer-implemented method of any of Aspects 11 to 14, wherein the one or more tasks requested by the voice input comprises performing an operation at the media device, wherein the operation comprises adjusting one or more settings at the media device, wherein the one or more settings comprises at least one of a volume setting, a display or video setting, a media content playback setting, an audio output setting, a closed caption setting, a language setting, a video output setting, and a power setting, and wherein triggering the media device to perform the one or more actions comprises triggering the media device to perform the operation.
Aspect 16. The computer-implemented method of Aspect 15, further comprising: obtaining information from one or more data sources about the one or more settings, the information about the one or more settings comprising at least one of instructions for adjusting the one or more settings and confirmation that the one or more settings can be adjusted as requested; determining, by the neural network, the response to the voice input further based on the information about the one or more settings.
Aspect 17. The computer-implemented method of any of Aspects 11 to 16, wherein the one or more tasks requested by the voice input comprises outputting an indication of an availability of one or more requested items comprising at least one of a content item, a media channel, scheduled television content from one or more television or streaming channels, a device setting, and a device capability, and wherein the response determined by the neural network indicates that the one or more requested items are available.
Aspect 18. The computer-implemented method of Aspect 17, further comprising: querying one or more data sources for data about the availability of the one or more requested items; receiving the data about the availability of the one or more requested items, wherein the data about the availability of the one or more requested items indicates that the one or more requested items are unavailable; and based on the data about the availability of the one or more requested items, revising, by the neural network, the response to the voice input to indicate that the one or more requested items are unavailable, wherein the output is based on the revised response.
Aspect 19. The computer-implemented method of any of Aspects 11 to 18, wherein the neural network comprises a large language model, and wherein the media device comprises at least one of a television, a gaming console, a set-top box, a streaming device, a computer, and a head-mounted display (HMD).
Aspect 20. The computer-implemented method of any of Aspects 11 to 19, further comprising: receiving an audio signal generated based on the voice input; based on the audio signal, recognizing speech in the voice input and generating the text transcript based on the recognized speech; and providing the text transcript to an input interface associated with the neural network.
Aspect 21. The computer-implemented method of any of Aspects 11 to 20, wherein the neural network comprises a large language model, and wherein the media device comprises at least one of a television, a gaming console, a set-top box, a streaming device, a computer, and a head-mounted display (HMD).
Aspect 21. The computer-implemented method of any of Aspects 11 to 20, wherein the neural network is implemented via at least one of the media device and a remote server system.
Aspect 22. A non-transitory computer-readable medium having instructions stored thereon that, when executed by one or more processors, cause the one or more processors to perform a method according to any of Aspects 11 to 21.
Aspect 23. A system comprising means for performing a method according to any of Aspects 11 to 21.

## Claims

1. A computer-implemented method comprising:
obtaining a text transcript of a voice input recognized using automatic speech recognition (ASR), the voice input requesting a media device to perform one or more tasks;
based on the text transcript and auxiliary data, generating an input to an artificial intelligence (AI) model configured to assist with voice interactions with the media device, the auxiliary data comprising at least one of a context of the media device, a context of a user associated with the voice input, and historical data associated with previous voice interactions with the media device assisted by the AI model;
based on the input, determining, by the AI model, a response to the voice input;
generating, by the AI model, an output based on the response to the voice input determined by the AI model;
converting the output from the AI model into one or more commands that are executable at the media device, wherein the one or more commands are configured to trigger the media device to perform one or more actions associated with the response to the voice input determined by the AI model; and
based on the one or more commands, triggering the media device to perform the one or more actions.

2. The computer-implemented method of claim 1, further comprising:
determining, by the AI model, to query one or more data sources for information used to verify the response to the voice input;
querying the one or more data sources for the information used to verify the response; and
based on a query response from the one or more data sources, determining, by the AI model, whether to revise the response to the voice input determined by the AI model.

3. The computer-implemented method of any of the preceding claims, wherein the one or more tasks requested by the voice input comprises outputting requested information about at least one of a content item, a media channel, scheduled television content from one or more television or streaming channels, a device setting, and a device capability, and wherein determining whether to revise the response to the voice input comprises:
querying one or more data sources for data used to verify the response;
receiving the data from the one or more data sources;
determining a difference between data in the response determined by the AI model and the data from the one or more data sources; and
revising, by the AI model, the response to the voice input based on the data from the one or more data sources, wherein the output is based on the revised response.

4. The computer-implemented method of any of the preceding claims, wherein the one or more tasks requested by the voice input comprises presenting a content item via a display associated with the media device, the computer-implemented method further comprising:
determining, by the AI model, that the content item is available to the media device from a data source, wherein the output comprises an instruction to obtain the content item from the data source and present the content item via the display, the one or more commands being configured to trigger the media device to obtain the content item from the data source and present the content item via the display; and
wherein triggering the media device to perform the one or more actions comprises triggering the media device to obtain the content item from the data source and present the content item via the display.

5. The computer-implemented method of any of the preceding claims, wherein the one or more tasks requested by the voice input comprises performing an operation at the media device, wherein the operation comprises adjusting one or more settings at the media device, wherein the one or more settings comprises at least one of a volume setting, a display or video setting, a media content playback setting, an audio output setting, a closed caption setting, a language setting, a video output setting, and a power setting, and wherein triggering the media device to perform the one or more actions comprises triggering the media device to perform the operation.

6. The computer-implemented method of claim 5, further comprising:
obtaining information from one or more data sources about the one or more settings, the information about the one or more settings comprising at least one of instructions for adjusting the one or more settings and confirmation that the one or more settings can be adjusted as requested;
determining, by the AI model, the response to the voice input further based on the information about the one or more settings.

7. The computer-implemented method of any of the preceding claims, wherein the one or more tasks requested by the voice input comprises outputting an indication of an availability of one or more requested items comprising at least one of a content item, a media channel, scheduled television content from one or more television or streaming channels, a device setting, and a device capability, wherein the response determined by the AI model indicates that the one or more requested items are available, the computer-implemented method further comprising:
querying one or more data sources for data about the availability of the one or more requested items;
receiving the data about the availability of the one or more requested items, wherein the data about the availability of the one or more requested items indicates that the one or more requested items are unavailable; and
based on the data about the availability of the one or more requested items, revising, by the AI model, the response to the voice input to indicate that the one or more requested items are unavailable, wherein the output is based on the revised response.

8. The computer-implemented method of any of the preceding claims, wherein the AI model comprises at least one of a large language model and a neural network.

9. The computer-implemented method of any of the preceding claims, further comprising:
receiving an audio signal generated based on the voice input;
based on the audio signal, recognizing speech in the voice input and generating the text transcript based on the recognized speech; and
providing the text transcript to an input interface associated with the AI model.

10. The computer-implemented method of any of the preceding claims, wherein the media device comprises at least one of a television, a gaming console, a set-top box, a streaming device, a computer, and a head-mounted display (HMD).

11. A non-transitory computer-readable medium having instructions stored thereon that, when executed by one or more processors, cause the one or more processors to perform a method according to any of claims 1 to 10.

12. A system comprising means for performing a method according to any of claims 1 to 10.

13. The system of claim 12, further comprising at least one of the media device, a remote server system, and a remote control comprising one or more microphones used to record the voice input.

14. The system of claim 13, wherein the AI model is implemented via the at least one of the media device and the remote server system.
